# EUROPEAN PATENT SPECIFICATION

(11) **EP 2 911 324 B1**
(45) Date of publication and mention of the grant of the patent: **15.05.2019**
(21) Application number: 15156105.7
(22) Date of filing: 23.02.2015
(51) Int. Cl.: H04H 40/90

(54) **Method and controller for collision avoidance**
Verfahren und Steuergerät zur Kollisionsvermeidung
Procédé et appareil de commande pour éviter les collisions

(30) Priority: 24.02.2014 EP 14156409
(43) Date of publication of application: 26.08.2015
(73) Proprietor: Sony Corporation, Tokyo 108-0075 (JP)
(72) Inventor: Eitel, Dr.-Ing. Ben, 71116 Gärtringen (DE); Guth, Heimo, 77776 Bad-Rippoldsau (DE)
(74) Representative: Witte, Weller & Partner Patentanwälte mbB

(56) References cited:
- EP-A1- 2 725 747
- WO-A2-2006/120203

## Description

### BACKGROUND

### FIELD OF THE DISCLOSURE

The present disclosure relates to a method and a controller for transmitting data over a bus, to which a plurality of receivers and/or controllers are connected, in particular for detecting a signal activity on the bus and for avoiding collisions on the bus. The present disclosure relates further to a receiver, a non-transitory computer-readable recording medium and a computer program.

### DESCRIPTION OF RELATED ART

In systems where several individual masters can be connected to one slave, as e.g. single cable satellite antenna systems, more than one master can start to transmit data to the slave at the same time. This may lead to data collision and thereby to data loss. To guarantee a satisfactory operation of all transmitting units it is necessary to provide means to detect and avoid data collision.

In single cable satellite antenna systems, several receivers are connected to a single cable interface (SCIF). Usually up to 8 individual receivers can be connected to the SCIF. Each of them can be tuned to a different frequency. A common standard is to use the "Digital Satellite Equipment Control Bus" (DiSEqC) for the communication between the receivers and the SCIF.

According to the Single Cable standard (EN 50494:2007 - Satellite signal distribution over a single coaxial cable in single dwelling installations) a supply voltage between 12.5 and 14 V is applied by each receiver or satellite receiver to the bus that connects the SCIF with the receivers as long as no control data are transmitted from the receivers to the SCIF. For each receiver the supply voltage is raised before transmitting data to a transmission voltage between 17 V and 19 V. The DiSEqC command

From: Witte, Weller & Partner To: 08923994465 Page: 13/15 Date: 03.09.2018 13:25:11 starts after a time interval of 4 to 22 ms. After transmitting data the voltage is lowered to the supply voltage within 2 to 60 ms.

Detection and avoidance of data collision is not a part of DiSEqC standard commands. Especially for a blind channel search in a single cable environment a DiSEqC standard command collision should be detected, to avoid wrong transponder search results. During large parts of such a scan normally no transport stream can be received as the frequency positions of potential transponders, which include these transport streams, are still unknown. During the remaining parts such a transport stream might be received, but still no reference exists to decide whether the received transport stream corresponds to the frequency selected by the DiSEqC command or not.

There is a need for providing a method and a controller that are able to prevent collisions and improve collision detection without the use of transport stream information.

EP 2725747 A1, published after the priority date of the present application, discloses a method for detecting a signal activity on a bus, which comprises measuring a current on the bus, and determining a signal activity based on the measured current. It is further disclosed that the step of measuring the sensing current may be repeated after a second predetermined time interval, which may have a length of 20 ms or any other appropriate length.

WO2006/120203 A2 also discloses a method for detecting signal activity on a bus, which comprises measuring voltage on the bus and determining signal activity based on the measured voltage.

The "background" description provided herein is for the purpose of generally presenting the context of the disclosure. Work of the presently named inventor(s), to the extent it is described in this background section, as well as aspects of the description which may not otherwise qualify as prior art at the time of filing, are neither expressly or impliedly admitted as prior art against the present disclosure.

### SUMMARY

It is an object to provide a method and a controller for transmitting data over a bus, to which a plurality of receivers and/or controllers are connected, which reliably enable the detection and avoidance of collisions, preferably in case of multiple potential collisions and/or in case receivers and/or controllers are connected to the bus having no means for collision detection and avoidance. It is a further object to provide a corresponding receiver as well as a corresponding computer program and a non-transitory computer-readable recording medium for implementing said method,

According to an aspect there is provided a method for transmitting data over a bus, to which a plurality of receivers and/or controllers are connected, said method comprising:
- measuring a sensing current on the bus;
- repeating the step of measuring the sensing current after a delay time interval, if the sensing current is measured to be at or below a predetermined current threshold; and
- applying a transmission voltage to the bus and transmitting data over the bus, if the sensing current is measured to be above the predetermined current threshold,
characterized in that said delay time interval is shorter than 10 ms.

According to a further aspect there is provided a controller for transmitting data over a bus, to which a plurality of receivers and/or controllers are connected, said controller comprising:
- a current sensor configured to measure a sensing current on the bus; and
- a control unit configured to control the current sensor to repeat the measuring of the sensing current after a delay time interval, if the sensing current is measured to be at or below a predetermined current threshold, and to apply a transmission voltage to the bus and transmit data over the bus, if the sensing current is measured to be above the predetermined current threshold,
characterized in that said delay time interval is shorter than 10 ms.

According to a further aspect there is provided a method for transmitting data over a bus, to which a plurality of receivers and/or controllers are connected, said method comprising:
- applying a test current to the bus;
- measuring a test voltage drop on the bus;
- repeating the step of measuring the test voltage drop after a delay time interval, if the test voltage drop is measured to be not below a predetermined voltage threshold; and
- applying a transmission voltage to the bus and transmitting data over the bus, if the test voltage drop is measured to be below the predetermined voltage threshold,
characterized in that said delay time interval is shorter than 10 ms.

According to a further aspect there is provided a controller for transmitting data over a bus, to which a plurality of receivers and/or controllers are connected, said controller comprising:
- a current source configured to apply a test current to the bus;
- a voltage sensor configured to measure a test voltage drop on the bus; and
- a control unit configured to control the voltage sensor to repeat the measuring of the test voltage drop after a delay time interval, if the test voltage drop is measured to be not below a predetermined voltage threshold, and
to apply a transmission voltage to the bus and transmit data over the bus, if the test voltage drop is measured to be below the predetermined voltage threshold,
characterized in that said delay time interval is shorter than 10 ms.

A receiver operable in a single cable system, the receiver being configured to receive satellite signals, the receiver comprising a controller as disclosed herein.

According to still further aspects a computer program comprising instructions which, when the program is executed by a computer, cause the computer to perform the steps of the method disclosed herein, as well as a non-transitory computer-readable recording medium that stores therein a computer program product, which, when executed by a processor, causes the method disclosed herein to be performed are provided.

Preferred embodiments are defined in the dependent claims. It shall be understood that the disclosed methods, the disclosed controllers, the disclosed receiver, the disclosed computer program and the disclosed computer-readable recording medium have similar and/or identical preferred embodiments as the claimed method and as defined in the dependent claims.

In the above described multi-master architecture DiSEqC command collision events may occur frequently. As specified in the above cited standard EN 50494, in case of a detected collision the receiver has to wait for a random delay time (referred to as delay time interval herein) before it can send the DiSEqC command again. The average delay of this random delay time is 500 ms and the maximum delay is approximately 1 second. These delays can sum up to a rather long delay in case of multiple collisions occurring subsequently between the same or different receivers or controllers. One of the aspects of the present disclosure is to substantially reduce the average random delay time to a very short time period, e.g. to a only few milliseconds, by means of sensing the bus activity, early recognition of the end of DiSEqC commands currently present on the bus, and (re-)sending the own DiSEqC command immediately afterwards, i.e. as soon as possible without the need to wait for a rather long time period as is currently the case.

It shall be noted that a measurement of the sensing current can be effected in different ways. In particular, the sensing current can be measured a single time, and depending on said single measurement it is decided if the sensing current is at or below the predetermined current threshold. In other embodiments the sensing current is measured several times within a very short interval (e.g. 10 times within 1 or 2 ms) and used in combination (e.g. the average of all sensing currents, the highest sensing current, the lowest sensing current, etc. is formed as combination) for obtaining a more reliable decision if the sensing current is at or below the predetermined current threshold. Between these measurements of sensing currents within a very short time interval generally no delay time interval is waited, but only after the decision the delay time interval is waited before a new measurement of the sensing current is made again. It shall also be noted that the same embodiments generally exist for the measurement of the test voltage drop after application of a test current on the bus.

The foregoing paragraphs have been provided by way of general introduction, and are not intended to limit the scope of the following claims. The described embodiments, together with further advantages, will be best understood by reference to the following detailed description taken in conjunction with the accompanying drawings.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:
Fig. 1A and 1B illustrate schematic block diagrams of a controller according to two embodiments.
Figs. 2A to 2D illustrate schematic block diagrams of controllers and a bus in different stages of an operation mode according to an embodiment where a sensing voltage is set and a sensing current on the bus is measured in order to detect a signal activity on the bus.
Figs. 3A and 3B illustrate schematic block diagrams of controllers and the bus in different stages of an operation mode according to an embodiment where a test current is set and a voltage drop on the bus is measured in order to detect a signal activity on the bus.
Figs. 4A and 4B illustrate signals occurring on the bus while a signal activity is detected and data collision is avoided according to embodiments.
Fig. 5 illustrates a signal used to transmit data on the bus in a time-voltage diagram to illustrate an embodiment of the method of detecting a signal activity on a bus.
Fig. 6 illustrates a signal used to transmit data on the bus in a time-voltage diagram to illustrate a further embodiment of the method of detecting a signal activity on a bus.
Fig. 7 illustrates a signal used to transmit data on the bus in a time-voltage diagram to illustrate still a further embodiment of the method of detecting a signal activity on a bus.
Figs. 8A to 8C show time-voltage diagrams illustrating various embodiments for collision detection and avoidance.
Fig. 9 illustrates an embodiment of a random delay generator.
Fig. 10 illustrates one embodiment of a single cable satellite antenna system.
Fig. 11 illustrates an embodiment of a receiver according to an embodiment.
Fig. 12 illustrates a process flow of a method according to an embodiment.
Fig. 13A illustrates one embodiment of a process flow of a method of detecting a signal activity and avoiding data collision by measuring a sensing current before and after transmission of data.
Fig. 13B illustrates a further portion of the process flow that may be included in the process flow of Fig. 13A.
Fig. 13C illustrates one embodiment of a process flow of a method of detecting a signal activity and avoiding data collision by measuring a voltage drop before and after transmission of data.
Fig. 13D illustrates a further portion of the process flow that may be included in the process flow of Fig. 13C.

### DETAILED DESCRIPTION OF THE EMBODIMENTS

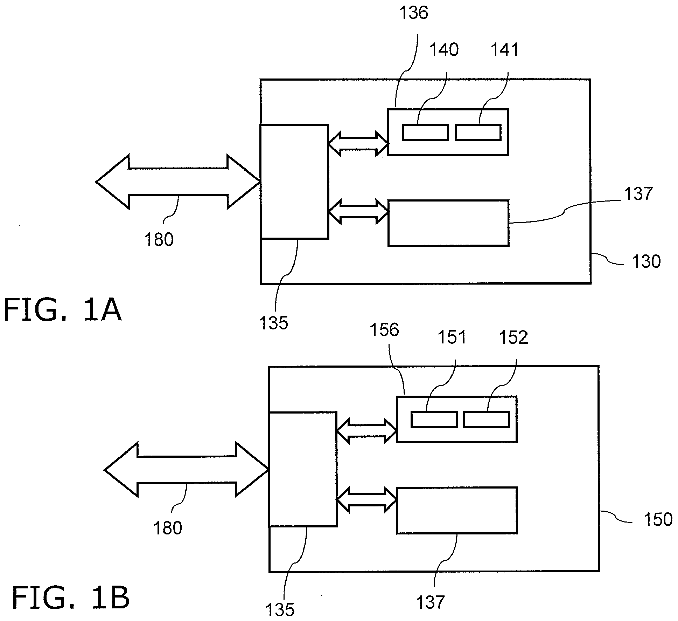

Referring now to the drawings, wherein like reference numerals designate identical or corresponding parts throughout the several views, Fig. 1 illustrates an embodiment of a controller 130. The controller 130 includes a controller interface 135 that is connected to a bus 180 outside of the controller 130, which is connected to a system such as a satellite receiver system. The controller 130 further includes a sensor 136 with a voltage source 140 and a current sensor 141, which is connected to the controller interface 135. The voltage source 140 is configured to apply a sensing voltage to the bus 180 and the current sensor 141 is configured to measure a sensing current on the bus 180. The controller 130 further includes a transmitter 137 connected to the controller interface 135 adapted to transmit data over the bus 180.

In this context, a "sensing current" shall be understood as a current that is measured on the bus in order to determine if the bus is free for transmission of data by the controller or not. In preferred embodiments the sensing current is measured while the voltage applied to the bus is set to a predetermined voltage level or a voltage in a predetermined voltage range. In other embodiments the sensing current is measured during a rising or falling edge of the voltage applied to the bus (wherein the gradient of the edge can preferably be controlled or set, e.g. by the design of hardware of the voltage source).

As long as no data signal is transmitted to the bus 180 by the transmitter 137, a supply voltage is applied to the bus 180 by the controller 130. The supply voltage may in one embodiment be within a first predetermined voltage range. The first predetermined voltage range may be 12.5 V to 14 V as is specified in the Single Cable Standard. For performing a blind channel scan command data, e.g. DiSEqC control signals may be transmitted as data from the transmitter 137 to the bus 180 in a data signal. For example, a DiSEqC control signal may be transmitted after an interaction with a user, e.g. when a user wants to change a channel. According to a further example, a DiSEqC control signal could be initiated based on a pre-defined schedule for a blind channel scan on a periodic basis, for example, weekly. As long as command data is transmitted from the transmitter 137 to the bus 180, a transmission voltage that may be in a second predetermined voltage range is applied to the bus. The second predetermined voltage range may be 17 V to 19 V as is specified in the Single Cable Standard. The sensing voltage applied from the sensor 136 to the bus 180 is between the supply voltage and the transmission voltage. The sensing voltage may be in a third predetermined voltage range. For example, the sensing voltage may be higher than the largest value of the first predetermined voltage range. According to a further embodiment, the sensing voltage may be smaller than the lowest value of the second predetermined voltage range. The sensing voltage may e.g. be 14 V or the arithmetic average of the supply voltage and the transmission voltage or any appropriate voltage value from the third predetermined voltage range, which is e.g. between 14 V and 17 V when using DiSEqC control signals in accordance with the Single Cable Standard.

The current sensor 141 measures a current (also called "sensing current" herein). From the measured current, a signal activity on the bus may be determined. Determining the signal activity may comprise comparing the measured current with a predetermined (current) threshold. This predetermined threshold may be within a first predetermined current range. The first predetermined current range may be 0.1 to 15 mA, 1 to 15 mA or any range that is considered appropriate. The first predetermined current range may depend on the current consumption of the SCIF and the number of controllers connected to the bus 180, and may be determined by an initial or a periodic test measurement. For example, the predetermined threshold may be stored in a memory 821, which may be a component of the receiver 81. The signal activity may be determined by the sensor 136 or by any other component of the controller 130 or the receiver. According to an embodiment, transmitting command data from the transmitter 137 to the bus 180 may be only allowed if the sensing current is above a predetermined threshold in order to avoid a collision.

According to one embodiment the sensing voltage is applied to the bus 180 and the sensing current on the bus 180 is measured immediately before the transmission voltage is applied, i.e. the sensing current is measured before transmitting command data to the bus 180. Before applying the transmission voltage the voltage may also drop to the supply voltage for a short time interval. Transmission of command data may be started after a first predetermined time interval (also called deferral time interval herein) starting after the sensing current has been measured.

According to another embodiment a further sensing current is measured during transmission of command data by the sensor 136. When the transmitter 137 in the controller 130 is transmitting command data to the bus 180 and the sensing current is measured to be at or below the predetermined threshold, the transmission may be interrupted and repeated (or tried to be repeated, if no collision is detected) after a delay time interval. The delay time interval may be predetermined time period or a random time period and has a short length. Generally, said delay time interval has a length that is shorter than 20 ms, preferably in the range between 1 ms and 20 ms, even more preferably in the range between 3 ms and 10 ms. Thus, the delay time interval is substantially shorter than the average time defined in the Single Cable standard. The particular value selected for the delay time interval may be predetermined (i.e. fixed) or selected on the fly. In some embodiments the value is related to the particular implementation of the controller, particularly the used hardware. Generally, the faster the voltage level may be changeable (automatically or under control) the shorter the delay time interval can be. Measurement of the sensing current is performed with a sampling frequency high enough to detect influences on the sensing current based on data transmitted by another controller.

According to another embodiment the further sensing current is measured during transmission of command data by the sensor 136. The further sensing current is measured with a sampling frequency that is chosen in order to detect changes in the sensing current corresponding to the frequency of the transmitted data. By generating decoded data based on the measured sensing current, it is checked whether the measured sensing current changes in correspondence with the command data. When the generated decoded data and the transmitted command data do not agree with each other, it is assumed that also another controller transmitted data on the bus at least partly at the same time, and the transmission may be repeated after the delay time interval.

According to another embodiment the sensing voltage is applied to the bus 180 and the sensing current on the bus 180 is measured immediately after transmitting command data to the bus 180. Before applying the sensing voltage the voltage may also drop to the supply voltage for a short time interval. The sensing voltage is applied after a third predetermined time interval starting after the transmission of command data has been ended.

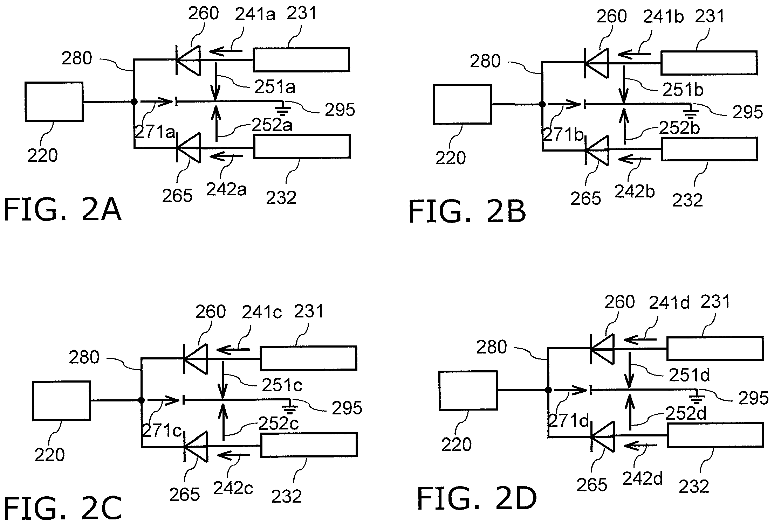

According to an embodiment a transmission process may be adapted in dependence from an activity on the bus 180. As a result, if more than one controller 130 is connected to the bus 180 a command data collision may be avoided. This embodiment exploits the fact that the sensing current of one controller 130 will be below the predetermined threshold as long as another controller is transmitting data signals. This will be detailed below in the description of Figs. 2A to 2D.

According to another embodiment of a controller 150 as depicted in Fig. 1B a sensor 156 includes a current source 151 and a voltage sensor 152. The current source 151 can apply a test current to the bus 180 and the voltage sensor 152 is adapted to measure a voltage drop (i.e. of the test voltage) between the controller interface 135 and the bus 180. Then, the controller 150 may determine a signal activity on the bus 180. The transmitter 137 may be configured to only transmit command data to the bus 180 if the voltage drop is below a predetermined (voltage) threshold that lies between the supply voltage and the transmission voltage. As a result, a collision of command data may be avoided. The test current may be in a second predetermined current range. The second predetermined current range may be e.g. 0.1 mA to 5 mA. The predetermined threshold for the voltage drop may be in a fourth predetermined voltage range. The fourth predetermined voltage range may include the value of 17 V or any threshold that is considered appropriate. The fourth predetermined voltage range may depend on the supply voltage of controllers connected to the bus 180, and may be determined by an initial or a periodic test measurement.

According to one embodiment the test current is applied to the bus 180 and the voltage drop between the controller interface 135 and the bus 180 is measured immediately before the transmission voltage is applied, i.e. the voltage drop is measured before transmitting command data to the bus 180. Transmission of command data is started after a first predetermined time interval starting after the voltage drop has been measured. The test current may also be applied to the bus 180 and the voltage drop may be measured after the third predetermined time interval right after transmitting command data to the bus 180.

A further voltage drop may also be measured by the sensor 156 during transmission of command data by transmitter 137 in controller 150. When the transmitter 137 is transmitting command data to the bus 180 and the voltage drop is measured to be above the predetermined threshold, the transmission is interrupted and repeated after the delay time interval. Measurement of the further voltage drop is performed with a sampling frequency high enough to detect influences on the voltage drop based on data transmitted by another controller.

According to another embodiment the further voltage drop is measured during transmission of command data by the sensor 156. The further voltage drop is measured with a sampling frequency that is chosen in order to detect changes in the further voltage drop corresponding to the frequency of the transmitted data. By generating decoded data based on the measured further voltage drop, it is checked whether the measured further voltage drop changes in correspondence with the command data. When the generated decoded data and the transmitted command data do not agree with each other, it is assumed that also another controller transmitted data on the bus at least partly at the same time, and the transmission may be repeated after the delay time interval.

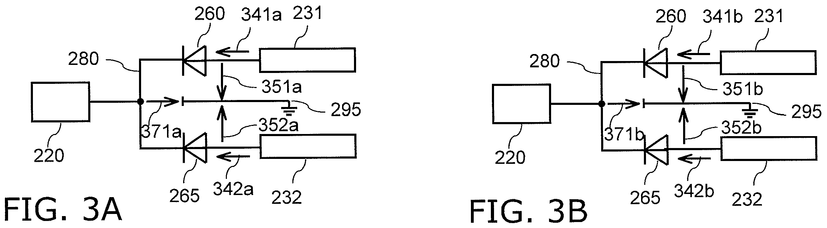

If the bus 180 is connected to more than one controller 130, according to an embodiment the transmission process may be adapted and a command data collision may be avoided due to the fact that a voltage drop between the controller interface 135 and the bus 180 of one controller 130 will be above the predetermined threshold if another controller is transmitting data signals to the bus 180. This is detailed in the description of Figs. 3A and 3B.

Figs. 2A to 2C illustrate schematic block diagrams of controllers and a bus in different stages of an operation mode when performing the method for transmitting data over a bus according to an embodiment.

Fig. 2A shows a first controller 231 and a second controller 232 connected via a bus 280 to a single cable interface (SCIF) 220. A first diode 260 and a second diode 265 prevent current inflow into the first controller 231 and the second controller 232. As long as neither the first controller 231 nor the second controller 232 are transmitting data signals via the bus 280 to the SCIF 220, a first voltage drop 251a between the first controller 231 and ground 295 and a second voltage drop 252a between the second controller 232 and ground 295 are equal to the supply voltage. In this situation a first current 241a and a second current 242a depend on the actual supply voltage and the power consumption of the SCIF 220.

A voltage drop 271a between the SCIF 220 and ground 295 differs from the first voltage drop 251a of controller 231 and the second voltage drop 252a of controller 232 and is slightly smaller than the larger supply voltage due to a small positive voltage drop at the current passing diode. For example, the voltage drop 271a may be equal to 12.5V in case that the larger supply voltage 251a is 13 V and a small positive current 241a passes through diode 260.

Fig. 2B illustrates the same configuration with the difference that the first controller 231 is transmitting command data to the SCIF 220 via the bus 280 while the second controller 232 is not transmitting data signals to the SCIF 220. Then, the first voltage drop 251b is equal to the transmission voltage and notably larger than the second voltage drop 252b that is equal to the supply voltage. Consequently, a larger positive current 241b is flowing into the bus 280 whereas diode 265 is blocking a negative current flow to controller 232, i.e. current 242b is approximately equal to zero.

The voltage drop 271b between the SCIF 220 and ground 295 differs from the first voltage drop 251b and the second voltage drop 252b and is slightly smaller than 18 V in the case that the transmission voltage is 18 V and the supply voltage is 13 V. Reasoning is a small positive voltage drop of e.g. 0.5 V at the current passing diode 260, whereas a larger negative voltage drop of e.g. -4.5 V occurs at the blocking diode 265.

Fig. 2C illustrates the same configuration with the difference that the sensor of the first controller 231 is applying the sensing voltage at the bus 280 while the second controller 232 is not transmitting data signals to the SCIF 220. Then, the first voltage drop 251c is equal to the sensing voltage and still clearly larger than the second voltage drop 252c that is equal to the supply voltage. Consequently, a larger positive current 241c is flowing into the bus 280 whereas diode 265 is blocking a negative current flow to controller 232, i.e. current 242c is approximately equal to zero. In this case the first current 241c is larger than the predetermined threshold value. The predetermined threshold value may be in a range from 0.1 to 15 mA, 1 to 15 mA or any threshold that is considered appropriate. Hence, no data signal on the bus 280 is detected by the sensor inside the first controller 231 and the transmitter inside the first controller 231 is allowed to transmit command data to the SCIF 220 via the bus 280.

The voltage drop 271c between the SCIF 220 and ground 295 differs from the first voltage drop 251c and the second voltage drop 252c and may be e.g. equal to 15 V in the case that the supply voltage is 13 V, and the sensing voltage is 15.5 V.

Fig. 2D illustrates the same configuration with the difference that the sensor of the first controller 231 is applying the sensing voltage to the bus 280 while the transmitter in the second controller 232 is transmitting command data to the SCIF 220 via the bus 280. Then, the first voltage drop 251d is equal to the sensing voltage and the second voltage drop 252d is equal to the transmission voltage. Since the transmission voltage is higher than the sensing voltage a positive current will flow from the second controller 232 through the second diode 265 but approximately no current will flow from the first controller 231 through the first diode 260 as this diode is blocking negative currents. Measuring the first current 241d will yield a value at or below the predetermined threshold. Hence, a signal activity or command data on the bus 280 is detected by the sensor inside the first controller 231. The transmitter inside the first controller 231 may be not allowed to transmit command data to the SCIF 220 via the bus 280. Thereby, a possible collision of the command data transmitted from the first controller 231 to the SCIF 220 with the command data transmitted from the second controller 232 to the SCIF via the bus 280 may be avoided.

The voltage drop 271d between the SCIF 220 and ground 295 differs from the first voltage drop 251d and the second voltage drop 252d and may be equal to 17.5 V in the case that the transmission voltage is 18 V, and the sensing voltage is 15.5 V.

Fig. 3A and 3B illustrate the same configuration as illustrated in Figs. 2A to 2D with the difference that the sensors in the first controller 231 and the second controller 232 are configured to apply the test current to the bus 280. After applying the test current, a voltage drop is measured.

Fig. 3A illustrates the situation in which the sensor of the first controller 231 is applying the test current to the bus 280 while the second controller 232 is not transmitting data signals to the SCIF 220. The value of the first current 341a is within the second predetermined current range of the test current, which may be e.g. 0.1 to 5 mA, and the second voltage drop 352a is equal to the supply voltage. Then, the first voltage drop 351a will only differ marginally from the supply voltage 352a, caused by slightly different small positive voltage drops at the diodes 260 and 265. Since the first voltage 351a is below the predetermined threshold, no data signal on the bus 280 is detected by the sensor inside the first controller 231, and the transmitter inside the first controller 231 is allowed to transmit command data to the SCIF 220 via the bus 280.

The voltage drop 371a between the SCIF 220 and ground 295 differs from the first voltage drop 351a and the second voltage drop 352a and may be equal to 12.5 V in the case that the supply voltage is 13 V, and the test current is 1mA.

Fig. 3B illustrates the situation in which the sensor of the first controller 231 is applying the test current to the bus 280 while the second controller 232 is transmitting command data to the SCIF 220 via the bus 280. The value of first current 341b is within the second predetermined current range of the test current, which may be e.g. 0.1 to 5 mA, and the second voltage drop 352b is equal to the transmission voltage. Then, the first voltage drop 351b will only differ marginally from the transmission voltage 352b, caused by slightly different small positive voltage drops at the diodes 260 and 265. Since the first voltage drop 351b is above the predetermined threshold, command data on the bus 280 is detected by the sensor inside the first controller 231 and the transmitter in the first controller 231 is not allowed to transmit command data to the SCIF 220 via the bus 280. By this, a possible collision of the command data transmitted from the first controller 231 to the SCIF 220 with the command data transmitted from the second controller 232 to the SCIF via the bus 280 may be avoided.

The voltage drop 371b between the SCIF 220 and ground 295 differs from the first voltage drop 351b and the second voltage drop 352b and may be equal to 17.5 V in the case that the transmission voltage is 18 V, and the test current is 1mA.

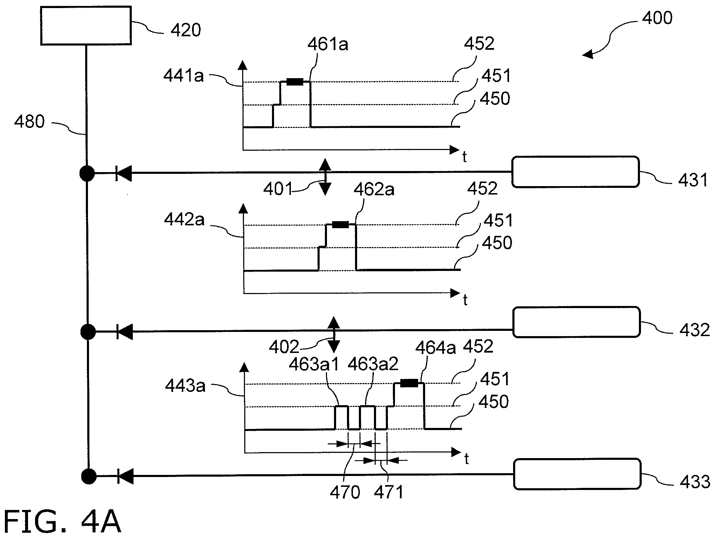

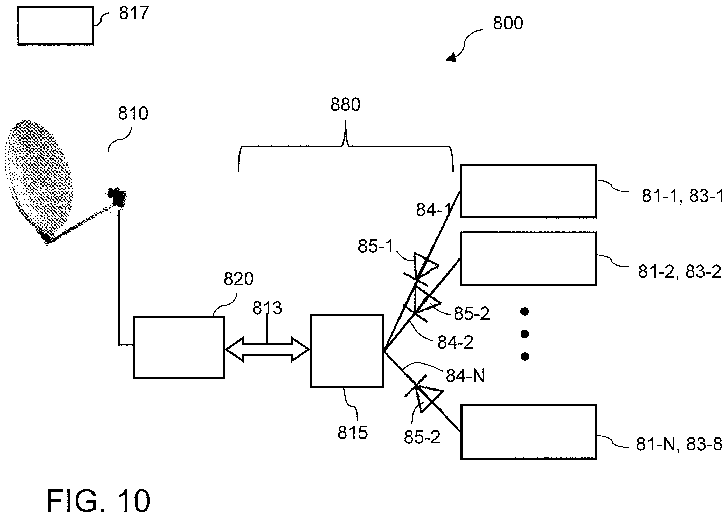

Fig. 4A shows a diagram 400 illustrating an example of signal activities on a bus 480 in combination with a network configuration when performing an embodiment of a method for transmitting data over the bus 480 and for detecting and avoiding command data collision. It is to be noted that Fig. 4A illustrates an example of a network configuration. According to another example, the controllers 431, 432, and 433 may be connected via one switch to a single cable as is also shown in Fig. 10. Fig. 4A shows data signals occurring on a bus 480 according to the method. A first controller 431, a second controller 432, and a third controller 433 are connected via the bus 480 with an SCIF 420. The first controller 431 is transmitting a first data signal 461a, the second controller is transmitting a second data signal 462a, and the third controller is transmitting a sensing data signal 463a and a third data signal 464a.

The data signals 461a, 462a, 463a, 464a transmitted from the controllers 431, 432, 433 to the bus 480 are illustrated in time-voltage diagrams 441a, 442a, 443a. Before and after transmitting data signals between every controller 431, 432, 433 and the bus 480 the supply voltage 450 is applied. While transmitting command data included in the data signals the transmission voltage 452 is applied. According to one embodiment immediately before transmitting command data the sensing voltage 451 is applied during the first predetermined time interval.

According to one embodiment, the first controller 431 transmits the first data signal 461a. The sensor of the first controller 431 raises the voltage from the supply voltage 450 to the sensing voltage 451. Since neither the second controller 432 nor the third controller 433 are transmitting data signals to the SCIF 420, the sensor of the first controller 431 measures a current larger than the predetermined threshold value. Thus, the first controller 431 determines that there is no signal activity on the bus 480. As this indicates that no command data collision is occurring, the transmitter of the first controller 431 raises the voltage from the sensing voltage 451 to the transmission voltage 452 and starts transmitting command data to the SCIF 420.

After the transmission by the first controller 431 has been ended and the voltage has been re-set to the supply voltage 450 the second controller 432 transmits the second data signal 462a to the SCIF 420. The sensor of the second controller 432 raises the voltage from the supply voltage 450 to the sensing voltage 451 and measures the sensing current. As neither the first controller 431 nor the third controller 433 is transmitting data signals to the SCIF 420, the sensing current is larger than the predetermined threshold value. Therefore, the second controller 432 determines that there is no signal activity on the bus 480. Hence, transmission is allowed and the transmitter of the second controller 432 raises the sensing voltage 451 to the transmission voltage 452 and transmits command data included in the second data signal 462a. After transmitting command data the voltage is lowered to the supply voltage 450. As indicated by the arrow 401 no collision between the first data signal 461a and the second data signal 462a has occurred.

During transmission by the second controller 432 the third controller 431 is sensing the bus by means of the sensing data signal 463a1. Therefore, the sensor of the third controller 433 is raising the voltage from the supply voltage 450 to the sensing voltage 451 and measures the sensing current. Since the transmitter of the second controller 432 is transmitting command data to the SCIF 420, the sensor of the third controller 433 measures a sensing current at or below the threshold value. The third controller 433 determines that there is a signal activity on the bus 480. Hence, the transmitter of the third controller 433 is adapting the transmission process. In particular, in order to avoid collision of command data the sensor of the third controller 433 lowers the voltage from the sensing voltage 451 to the supply voltage 450. However, rather than waiting for a second predetermined time interval (which on average lasts approximately 500 ms up to maximum of approximately 1 s) and delaying the transmission of the third data signal 464a for said second predetermined time interval, the voltage is lowered from the sensing voltage 451 to the supply voltage only for a short delay time interval 470 (which is shorter than 20 ms, preferably between 3 and 10 ms, e.g. 5 ms) as illustrated in the time-voltage diagram 443a. After said time interval 470 the third controller 433 is raising the voltage from the supply voltage 450 to the sensing voltage 451 again and measures the sensing current again to sense the bus by means of the sensing data signal 463a2. If, as in this example, the transmitter of the second controller 432 (or of any other controller) is (still) transmitting command data to the SCIF 420, the sensor of the third controller 433 again measures a sensing current at or below the threshold value. The third controller 433 thus again determines that there is a signal activity on the bus 480, and the voltage is again lowered from the sensing voltage 451 to the supply voltage 450 for another short delay time interval 471.

After said time interval 470 the third controller 433 is raising the voltage from the supply voltage 450 to the sensing voltage 451 again and measures the sensing current again to sense the bus. Now, in this example, the second controller 432 has ended to transmit the second data signal 462a to the SCIF 420 and therefore the sensing current measured by the sensor of the third controller 433 is above the predetermined threshold when the third controller 433 applies the sensing voltage again. The third controller 433 now determines that there is no signal activity on the bus 480. Hence, the transmitter of the third controller 433 raises the sensing voltage 451 to the transmission voltage 452 and transmits the command data included in the third data signal 464a.

It should be noted that the third controller may, instead of measuring the sensing current a single time by use of the sensing data signal 463a1, measure the sensing current several times within a very short interval (e.g. 10 times within 1 or 2 ms), i.e. during the same time interval of the sensing data signal 463al. These multiple measurements may then be used in combination. For instance, the average of all measured sensing currents, or the highest sensing current of the measured sensing current, or the lowest sensing current of the measured sensing current, etc. may be formed (also referred to as "combined sensing current") and used for deciding if the sensing current is at or below the predetermined current threshold. Between these measurements of sensing currents within a very short time interval generally no delay time interval is applied, but only after the decision the delay time interval 470 is applied before a new measurement of the sensing current is made again.

In an embodiment the steps of raising the voltage to the sensing voltage 51 and measuring the sensing current to sense the bus are repeated until the sensing current is above the predetermined threshold. Otherwise, these steps are repeatedly carried out after short delay time intervals as explained above. This may be done an unlimited number of times. In other embodiments the number of repetitions may be limited or the total time for repeating these steps may be limited. Generally, any useful condition may be used with respect to stopping these repetitions.

By this method the transmission process is adapted in dependence from a detected signal activity on the bus. Thereby, a possible collision, as indicated by the arrow 402, between the second data signal 462a and the colliding data signal 463a, is avoided. All three data signals 461a, 462a, 464a are sent separately to the SCIF 420 via the bus 480. Most possible collisions can be avoided by this method irrespective if all controllers have implemented this collision detection method or not. Further, by repeatedly sensing the current on the bus with only short delay time intervals in between, the end of a potential collision (i.e. the use of the bus by another controller or receiver) can be quickly or almost immediately recognized so that the transmission of data over the bus can be quickly started with only a very small risk of causing a collision.

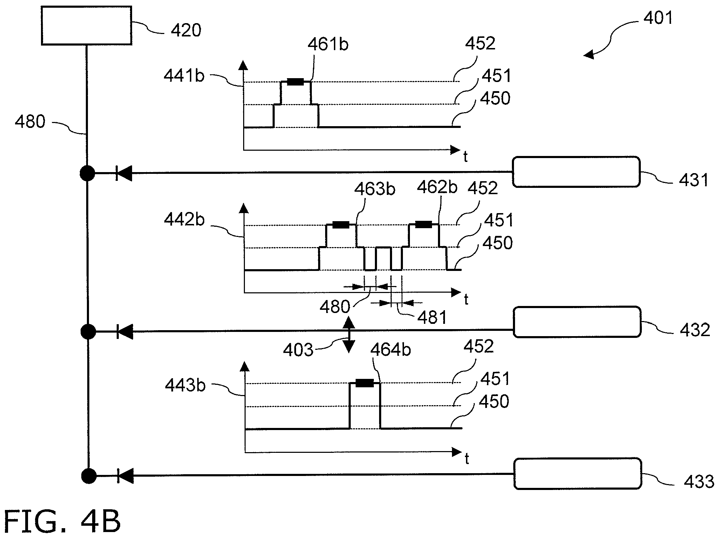

Fig. 4B shows a diagram 401 illustrating an example of a signal activity in a system comprising receivers according to an embodiment and a further receiver in which a collision detection method is not implemented. Fig. 4B illustrates data signals occurring on the bus 480 according to another embodiment of a method for transmitting data over the bus 480 and for detecting and avoiding command data collision. The first controller 431 is transmitting the first data signal 461b, the second controller 432 is transmitting the corrupted data signal 463b and the second data signal 462b. The third controller 433 has no collision detection method implemented. Thus, controller 433 does not sense the bus but rather directly starts to send the data signal 464b. The controller 433 may be a legacy device without collision detection support.

As is illustrated in the time-voltage diagrams 441b and 442b, the supply voltage 450 is raised to the sensing voltage 451 and the sensing current is measured before the voltage is raised to the transmission voltage 452 and the transmitters in the controllers 431, 432 transmit command data included in the data signals 461b, 463b, 462b to the SCIF 420. After transmitting command data the transmission voltage is lowered to the sensing voltage instead of the supply voltage and the sensing current is measured again. Thereby it is possible for one of the controllers 431, 432 to detect whether another controller 433 has started to transmit data signals to the SCIF 420 while the controller was still transmitting command data included in data signals to the SCIF 420.

According to one embodiment, the first controller 431 transmits the first data signal 461b to the SCIF 420. The sensor in the controller 431 raises the supply voltage 450 to the sensing voltage 451 and measures the sensing current. As no other data signal is transmitted from the second and the third controllers 432, 433, the sensing current is above the predetermined threshold. Consequently, the voltage is raised by the transmitter in the first controller 431 to the transmission voltage 452 and command data included in the first data signal 461b is transmitted from the first controller 431 to the SCIF 420. After transmitting the command data the voltage is lowered to the sensing voltage 452 by the sensor inside the controller 431 and the sensing current is measured again. Since no other controller is transmitting data signals the sensing current is again above the predetermined threshold value, no collision is detected, and the voltage is lowered to the supply voltage 450.

After the first controller has ended to transmit the first data signal 461b, the second controller 432 transmits the data signal 463b to the SCIF 420 and also detects no other transmitted data signals after having raised the voltage from the supply voltage 450 to the sensing voltage 451.

As indicated by the arrow 403, while transmitting command data included in the data signal 463b from the second controller 432 to the SCIF 420 the third controller 433 starts to transmit the data signal 464b. The controller 433 may be a legacy device without collision detection support. The controller 433 directly raises the supply voltage 450 to the transmission voltage 452 without measuring the current and without detecting a signal activity on the bus 480. As a consequence, data signal 464b is colliding with the data signal 463b leading to a corruption of both data signals 463b and 464b.

The second controller 432 ends transmitting the command data included in the corrupted data signal 463b to the SCIF 420 and the sensor of the second controller 432 lowers the voltage to the sensing voltage 451. Since the third controller 433 is still transmitting the colliding data signal 464b, the sensor of the second controller 432 measures a sensing current at or below the predetermined threshold. Consequently, the second controller 432 adapts the transmission process by repeatedly lowering the sensing voltage 451 to the supply voltage 450, waiting for a short delay time interval 480, 481, raising the voltage to the sensing voltage 451 and measuring the sensing current until the sensing current is measured to be above the predetermined threshold. This repetitive approach is substantially similar to the approach performed before starting to transmit data as explained above with respect to Fig. 4A. Once the sensing current is measured to be above the predetermined threshold the controller 432 repeats the transmission of the corrupted data signals 463b to the SCIF 420.

While the second controller 432 is waiting to repeat its corrupted signal 463b as the second signal 462b, the third controller finishes transmitting of the colliding data signal 464b and lowers the transmission voltage 452 to the supply voltage 450.

According to this embodiment the data signals 461b, 462b transmitted by controllers that implement the method for collision detection can be correctly received by the SCIF 420 although the colliding data signal 464b has corrupted the data signal 463b. Applying the sensing voltage 451 before and after transmitting command data provides therefore high probability to detect command data, as e.g. DiSEqC control signals, on the bus in order to avoid data collision, and high probability to detect collisions in order to adapt the transmission process accordingly, e.g. by re-transmission of collided command data. The sensing voltage 451 may also be applied only after transmitting command data. Further, by repeatedly sensing the current on the bus with only short delay time intervals in between, the end of transmission by the conflicting can be quickly or almost immediately recognized so that the repetition of the transmission of data over the bus can be quickly started.

By replacing in the description of Figs. 4A and 4B applying of the sensing voltage by applying a test current and by replacing measurement of the sensing current by measurement of the (test) voltage drop according to the description of Figs. 3A and 3B another embodiment of a method of transmitting data over a bus and of detecting and avoiding command data collision is described and obtained.

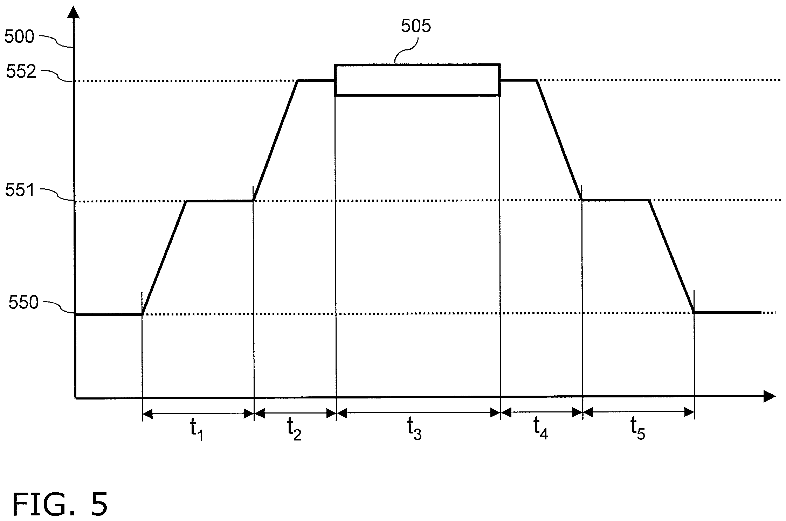

Fig. 5 illustrates a time-voltage diagram 500 of one of the data signals shown in Fig. 4B. Before and after transmission of the data signal the supply voltage 550 is applied to the bus. Within a time interval t1 the supply voltage 550 is raised to the sensing voltage 551 and the sensing current is measured. Within a time interval t2 the sensing voltage 551 is raised to the transmission voltage 552 if the sensing current is above the predetermined threshold. The command data 505 included in the data signal is transmitted during a time interval t3. After transmitting the command data 505 the transmission voltage 552 is lowered to the sensing voltage 551 within a time interval t4. During the time interval t5 the sensing current is measured and the sensing voltage 551 is lowered to the supply voltage 550.

The time intervals t1, t2, t4, and t5 may be as short as possible in order to avoid overlap of data signals transmitted from different controllers that have not yet reached the transmission voltage 552 and to ensure that no controller can send data signals that are too short to be detected. The time interval t2 is the first predetermined time interval. The time interval t4 is the third predetermined time interval. For example, the time interval t2 may range from 4 ms to 20 ms, while the time interval t4 may range from 2 ms to 60 ms. The time intervals t1 and t5 may be much shorter than the sum of the time intervals t2, t3, and t4 in order to minimize the probability of a sensing voltage collision. The time intervals t1 and t5 each may be as short as possible but may also be as long as is appropriate. The interval t1 or t5 may also be absent when detection and avoidance of data collision is performed with a single measuring of the sensing current.

According to the embodiments explained above with reference to Figs. 1A and 2A to 2D, the sensor 136 may comprise a voltage source 140 that applies a specific sensing voltage to the bus. After applying the sensing voltage to the bus, the sensing current is measured.

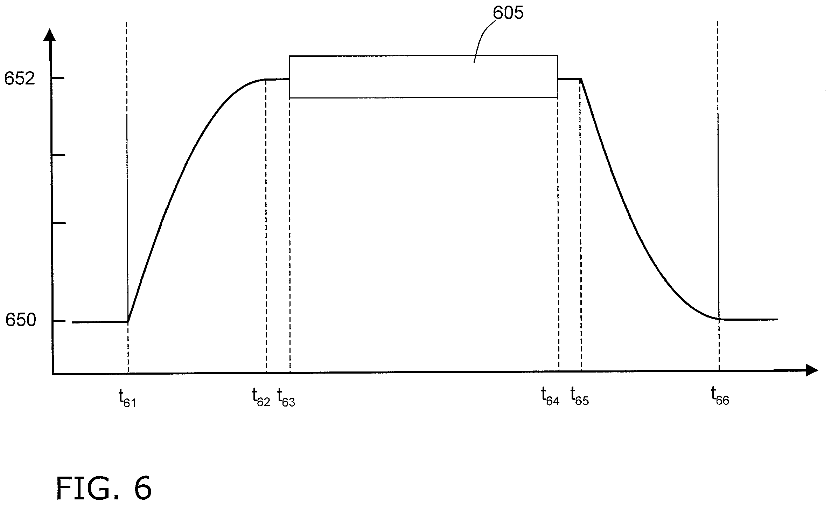

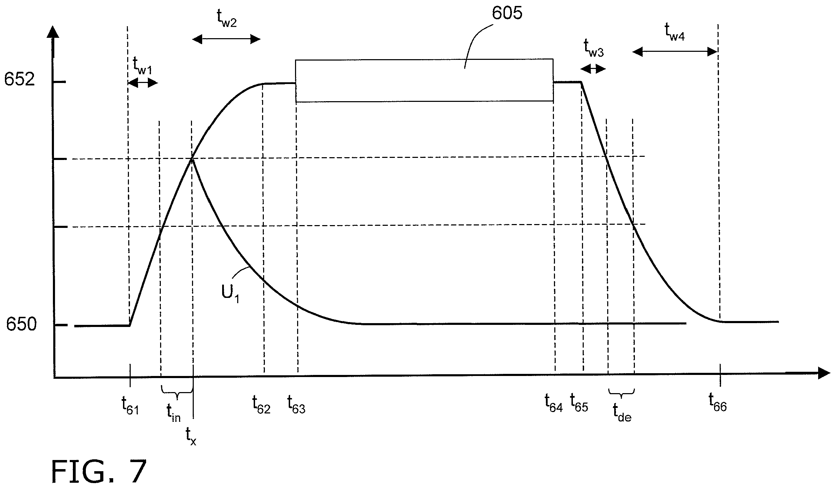

According to a further embodiment, which is illustrated in Figs. 6 and 7, the controller may be configured to measure a current on the bus after changing a level of a voltage applied to the bus, without setting a specific sensing voltage. As has been explained above, in order to indicate the transmission of a DiSEqC command, the controller changes the voltage level from a supply voltage 650 in the first predetermined voltage range (12.5 to 14V) to a transmission voltage 652 in the second predetermined voltage range (17 to 19V). After finishing the transmission of the DiSEqC command, the voltage level is changed again to the supply voltage 650 in the first predetermined voltage range. Usually, due to capacitances and/or inductances present within the controller, the voltage does not increase and decrease in a step-like manner, but increases and decreases gradually with time, as shown by the voltage-time diagram shown in Fig. 6. Depending e. g. on the specific implementation of the controller and the capacitances or further electrical characteristics of components within the controller, the time from starting to increase the supply voltage to reaching the higher transmission voltage level is in a first specific range, for example, 4 ms to 22 ms. In a similar manner, when decreasing the voltage from the elevated transmission level in the second predetermined voltage range to the supply voltage in the first predetermined voltage range, the time for reducing the voltage may be in a second specific range of approximately 2 ms to 60 ms. Accordingly, the embodiments illustrated by Figs. 6 and 7 may be implemented using e.g. commonly available controllers or receivers, wherein a sensor of the controller is configured to measure a current after the voltage applied to the bus has been changed. The signal activity is determined based on the measured current.

According to the embodiment, at any time during a first period of increasing the voltage and/or a second period of decreasing the voltage, the current may be determined by the sensor, and the signal activity may be determined based on the measured current. According to the embodiment illustrated by Fig. 7, the time interval in which the measurement may be performed may be shortened taking into account the voltage-time characteristic of the controller. According to both embodiments, the method of detecting a signal activity on the bus may be performed in a similar manner as has been illustrated in Figs. 2A to 2D, 4A and 4B, wherein the voltage-time diagram shows a DiSEqC command pulse having edges with a gradually increasing or decreasing slope. For example, the voltage-time diagram may not have a sensing voltage "plateau" corresponding to the specific sensing voltage.

According to the embodiment illustrated by Fig. 6, the time interval between starting to change the voltage and sending the DiSEqC command may be used for measuring the current and determining an activity on the bus. Further, the time interval between finishing transmission of the DiSEqC command and reaching the voltage corresponding to the supply voltage may be used for measuring the current and determining the activity on the bus from the measured current. In Fig. 6, t₆₁ indicates the time at which the voltage starts to increase from the supply voltage level 650, and t₆₂ indicates the time at which the higher transmission voltage level 652 is reached. t₆₃ indicates the time at which transmission of a DiSEqC command pulse 605 is started. Transmission of the DiSEqC command pulse 605 is finished at t₆₄. At t₆₅ the voltage starts to decrease, and t₆₆ indicates the time at which the lower supply voltage level is reached. The time interval from t₆₁ to t₆₃ indicates a possible measurement window for measuring a current on the bus in order to detect signal activities of other receivers or controllers on the bus. Thereby, collisions may be avoided. Similarly, the interval between t₆₄ and t₆₆ designates a possible measurement window for measuring a current on the bus in order to detect signal activities of other receivers or controllers on the bus. Thereby, collisions may be avoided. For example, at a time tᵢₙ with t₆₁ < tᵢₙ < t₆₂, the controller may measure the current when increasing the voltage, and at a time t_{de} with t₆₅ < t_{de} < t₆₆, the controller may measure the current when decreasing the voltage applied to the bus. In the time intervals between t₆₂ and t₆₃ and between t₆₄ and t₆₅, the voltage is at the transmission voltage level 652. By measuring a current in these time intervals, for example, colliding commands may be detected, if the transmission voltage of these commands is higher than the transmission voltage level 652. This may, for example, be useful in cases in which another controller or receiver sends a DiSEqC command pulse having a steeper edge in the voltage time diagram.

As has been described above, determining a signal activity may comprise determining whether the measured current is higher than a predetermined threshold or not. If the current is higher than a predetermined threshold, it is determined that there is no signal activity on the bus. On the other hand, if the current is below the predetermined threshold, it is determined that there is a signal activity on the bus. The threshold may be determined in the manner that has been explained above with reference to Figs. 2A to 2D. For determining the signal activity, it is not necessary to know the exact voltage at which the current is measured. According to an embodiment, the current may be measured during the measurement window of the raising edge, of the falling edge or of both. Differently stated, the current may be measured in a time interval between t₆₁ and t₆₂ or between t₆₁ and t₆₃ and/or in a time interval between t₆₄ and t₆₆ or t₆₅ and t₆₆. In addition or alternatively, the current may be measured in a time interval between t₆₂ and t₆₃ and/or in a time interval between t₆₄ and t₆₅, for example, when the applied voltage corresponds to the transmission voltage 652, but transmission of the DiSEqC command has not started yet or has already been finished. Optionally, such a measurement can be performed periodically. Thereby, DiSEqC commands of other devices having a steeper rising edge and/or a higher transmission voltage may be detected. For example, in case of a detection of a signal activity, the transmission of the DiSEqC command can be stopped betimes before the transmission voltage has been reached. Thereby, a collision may be avoided. Likewise, immediately after the transmission of the DiSEqC command, when the applied voltage still corresponds to the transmission voltage 652, the current may be measured and a signal activity may be determined from the measured current. In case of a detection of a signal collision, the transmission of the DiSEqC command can be repeated after some time. Thereby, the reliability of the transmission process may be increased.

According to the embodiment illustrated in Fig. 7, the measurement window may be set taking into account a wait time interval t_{w} after starting to change the voltage level and before measuring the current. As a result, it may be ensured that the current is measured when the voltage is larger than the supply voltage of another device. Hence, a wrong interpretation of the measured current may be avoided and the reliability of the measurement is increased. For example, the following relationship may hold: t₆₁ + t_{w1} ≤ tᵢₙ ≤ t₆₃, wherein t_{w1} designates a wait time interval after starting to increase the voltage and tᵢₙ designates a time within this measurement window when increasing the voltage. Additionally or alternatively, when decreasing the voltage, the measurement may be performed a further wait time interval t_{w4} before the supply voltage is reached. For example, the relationship may hold: t₆₅ ≤ t_{de} ≤ t₆₆ - t_{w4}, wherein t_{de} designates a time within this measurement window when decreasing the voltage. As a result, it may be ensured that the current is measured when the voltage is larger than the supply voltage of another device and the reliability may be increased. According to further embodiments, when increasing the voltage level, the current may be measured a further wait time t_{w2} before the transmission voltage is reached. For example, tᵢₙ ≤ t₆₂ - t_{w2}. As a further option, when decreasing the voltage level, the current may be measured a wait time t_{w3} after starting to decrease the voltage. For example, t_{de} ≥ t₆₅ + t_{w3}. The respective wait time intervals may in one embodiment be determined on the basis of the electrical characteristics of the controller and, optionally, the receiver.

For example, calibration measurements may be performed in order to obtain a voltage-time characteristic of the controller when increasing the voltage from the lower supply voltage level to the higher transmission voltage level and vice versa. These calibration measurements may be performed during a time when no transmissions occur or are planned. For example, the calibration measurements may be performed when a new controller or receiver is put into use at initial setup or at specified time intervals. Alternatively, the calibration measurements may be performed at the factory. From the voltage-time characteristic the respective wait time intervals t_{w1} and/or t_{w4} may be determined taking into account the first predetermined voltage range of usually employed receivers. By determining the wait time intervals t_{w1} and/or t_{w4} in this manner, the fact that other receivers present in the communication system may be operated at different supply voltages is taken into account. As a result, the reliability of the detection may be increased. Alternatively, typical values for the different wait times may be known and may be used, which further simplifies the implementation and reduces costs.

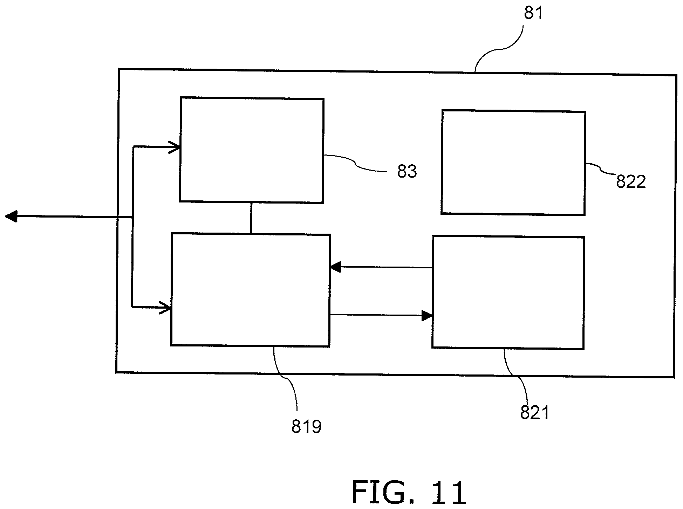

Optionally, the wait time intervals t_{w2} and t_{w3} may be determined so that the applied voltage is smaller than the lowest value of the second predetermined voltage range of commonly used receivers. As will be also explained below with reference to Fig. 11, according to an embodiment the receiver may additionally comprise a memory which may store some or all of the wait time intervals determined after performing calibration measurements. According to an embodiment, some or all of the wait time intervals may be determined by the manufacturer of the controller and may be stored into the memory.

According to still a further embodiment, the voltage-time characteristic or the transient behaviour of the receiver may be set by the manufacturer. For example, the receiver may further comprise a capacitance having a specified capacitance value or any other suitable electric component which may further influence the voltage-time characteristic so as to set specified lengths of the wait time intervals.

According to a further embodiment, the wait time interval t_{w1},... t_{w4} may be determined so that the measurement is performed at a voltage that lies in the third predetermined voltage range that has been explained above with reference to Fig. 1. Thereby, the reliability of the detection method may be further increased.

Fig. 7 further shows an example of a voltage-time characteristic for a case when a signal activity has been detected. According to the embodiment, after the signal activity has been detected, the receiver stops a transmission of data on the bus before starting of the transmission, thereby avoiding a collision. As is illustrated by curve U₁, the voltage therefore drops beginning at a time tₓ until it reaches the lower supply voltage level.

According to an embodiment, the current may be measured during transmission of command data as has been explained above with reference to Figs. 1A and 1B. According to this embodiment, the command data on the bus may be captured by measuring the current. Then, the command data are decoded. The decoded data and the transmitted command data are compared and if they do not agree with each other, it is assumed that also another controller transmitted data on the bus at least partly at the same time. As a result, the transmission may be repeated after the second predetermined time interval.

According to the embodiments disclosed, the controller may comprise a voltage source that is configured to apply a voltage to the bus, the voltage source being configured to change a voltage applied to the bus. The controller further includes a sensor configured to measure a current after the voltage applied to the bus by the voltage source has started to change, and a transmitter configured to adapt a transmission process of transmitting data on the bus based on a signal activity, the signal activity being determined based on the measured current. According to an embodiment, the voltage source may form part of a transmitter part of the receiver which normally applies a transmission voltage to the bus when starting a transmission process. The sensor may be a commonly used current sensor integrated within the controller.

According to a further embodiment, a receiver that is operable in a single cable system and which is configured to receive satellite signals may comprise the controller as described above and a processor or circuitry that is configured to determine a signal activity based on the measurement current. The receiver may further include a memory which may store, for example, one or more wait time intervals. The receiver may further comprise an additional capacitance or electrical components which may influence the voltage-time characteristics. The memory may also store a voltage-time characteristic of the controller and/or a predetermined threshold for determining whether there is a signal activity on the bus. As is clearly to be understood, the controller itself may additionally comprise any of these components.

According to a further embodiment, a method of operating a receiver or controller may comprise instructing the controller to change a level of a voltage applied to the bus and, thereafter, to measure a current on the bus. The method may further comprise instructing a component of the receiver to determine a signal activity based on the measured current. According to an embodiment, the processing device may perform the method of operating the receiver. For example, the processing device may determine the signal activity based on the measured current.

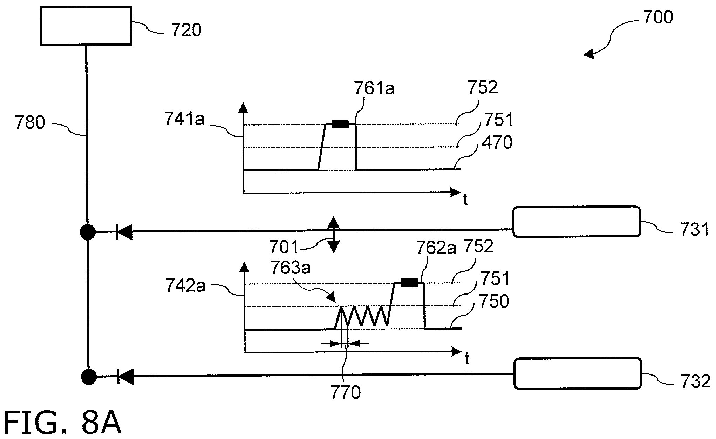

Fig. 8A shows a diagram 700 illustrating another example of signal activities on a bus 780 in combination with a network configuration when performing an embodiment of a method for transmitting data over the bus 780 and for detecting and avoiding command data collision. A first controller 731 and a second controller 732 are connected via the bus 780 with an SCIF 720. The first controller 731 is transmitting a first data signal 761a and the second controller is transmitting a second data signal 762a. Said data signals 761a, 762a are illustrated in time-voltage diagrams 741a, 742a. Before and after transmitting data signals between every controller 731, 732 and the bus 780 the supply voltage 750 is applied. While transmitting command data included in the data signals the transmission voltage 752 is applied.

According to one embodiment, the first controller 731 transmits the first data signal 761a. The sensor of the first controller 731 raises the voltage from the supply voltage 750 to the sensing voltage 751. Since neither the second controller 732 nor any other (not shown) controller are transmitting data signals to the SCIF 720, the sensor of the first controller 731 measures a current larger than the predetermined threshold value. Thus, the first controller 731 determines that there is no signal activity on the bus 780. As this indicates that no command data collision is occurring, the transmitter of the first controller 731 raises the voltage from the sensing voltage 751 to the transmission voltage 752 and starts transmitting command data to the SCIF 720.

During transmission by the first controller 731 the second controller 732 is raising the voltage from the supply voltage 750 to the approximately the sensing voltage 751 for sensing the bus 780 by measuring the sensing current. Since the transmitter of the first controller 731 is transmitting command data to the SCIF 720, the sensor of the second controller 732 measures a sensing current at or below the threshold value and determines that there is a signal activity on the bus 780, i.e. a potential collision as indicated by the arrow 701. Hence, the transmitter of the second controller 732 allows the voltage to drop for delay time period 770. In an embodiment the voltage is actively set back to the supply voltage as shown in Fig. 4. Due to capacitive effects the voltage level on the bus does not fall back to the supply voltage immediately. The delay time period 770 should be sufficiently large to avoid that the sensing voltage gets larger with each measurement and finally reaches the transmission voltage. After said delay time period 770 the voltage is again raised to approximately the sensing voltage 751 and the bus is sensed again. These steps are repeatedly carried out until a sensing current above the threshold value is measured (or any other stop criterion is met). Once a sensing current above the threshold value is measured the voltage is further increased to the transmission voltage 752 and the command data are sent as second data signal 762a.

Thus, by means of repeatedly measuring the current on the bus 780 (within short time intervals below 20 ms, e.g. 5 ms) as indicated by the measurement signal 763a in Fig. 8A, immediately after a collision has been detected the end of the current single cable pulse on the bus can be recognized. As soon as a sensing current above the threshold value is measured, the own DiSEqC command can be sent immediately with only a small risk of causing a collision.

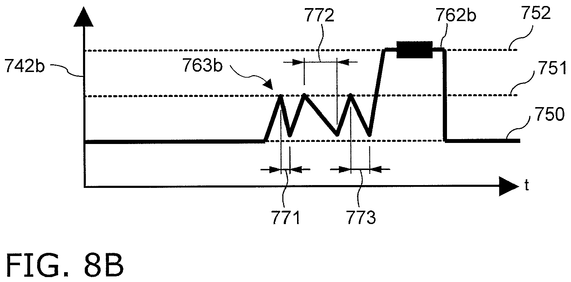

Fig. 8B only shows another time-voltage diagram 742b illustrating another embodiment of signals of the second controller 732 in the same situation as illustrated in Fig. 8A, i.e. in case a collision is detected when the second controller 732 wants to start transmitting data. While in the embodiment illustrated in Fig. 8A the delay time periods 770 between detecting a collision (i.e. measuring a sensing current at or below a predetermined threshold) and starting to raise the voltage again (in order to measure a sensing current again) are fixed and predetermined, in another embodiment the delay time periods 771, 772, 773 are not fixed and predetermined but have a variable, preferably random length within the lower limit of 1 ms and the upper limit of 20 ms. Like in the embodiment illustrated in Fig. 8A, after the measurement signal 763b the command data are transmitted as second data signal 762b.

In this way the risk of a collision with another device (controller, receiver) that has implemented the same or similar bus sensing technology can be further reduced. By adding a (small) random delay time (e.g. some µsec) either between subsequent measurements each time a collision is detected and/or as soon as a free bus is detected, a possible deadlock of devices with same or similar bus sensing technology can be avoided.

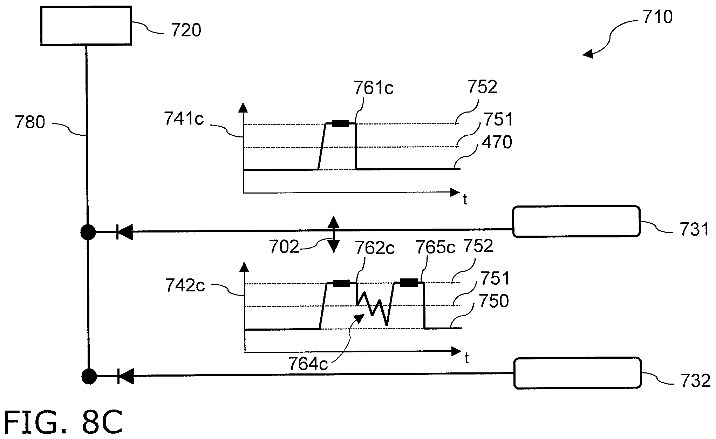

Fig. 8C shows a diagram 710 of time-voltage diagrams 741c and 742c illustrating another embodiment of signals of the first and second controllers 731, 732 in case a collision is detected when the second controller 732 finishes transmitting data. In particular, after the second controller 732 has transmitted data as data signal 762c the voltage is reduced to approximately the sensing voltage 751, at which point the bus 780 is sensed. Since at the same time the first controller 731 is still transmitting data by the data signal 761c, a sensing current is measured by the second controller 732 to be at or below the predetermined threshold. This indicates to the second controller that currently (and potentially before) there is / has been a collision on the bus as indicated by the arrow 702, which could not have been recognized before the start of the transmission by the second controller 732 and which had not been recognized by the first controller 731, e.g. because it does not have a collision recognition mechanism.

Subsequently, the second controller 732 is repeatedly measuring the current on the bus 780 (within short time intervals of 1 to 20 ms, e.g. 5 ms) as indicated by the measurement signal 764c to immediately recognize the end of the collision, i.e. the end of the transmission of data by the first controller 731. If the end of the collision has been detected, the second controller 732 is preferably starting to transmit the same data again as data signal 765c to make sure that the data are correctly sent over the bus 780.

The delay time intervals in the measurement signal 764c may be of identical length or, like in the embodiment illustrated in Fig. 8B, have a variable (e.g. random) length.

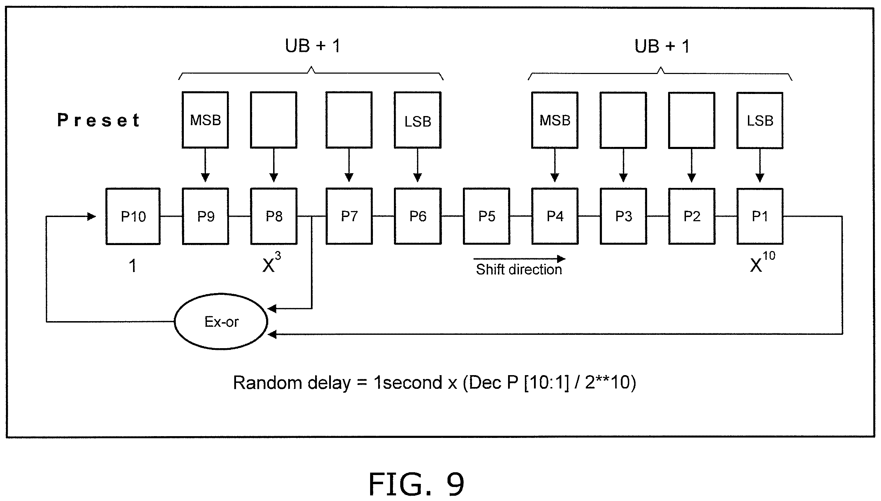

For the purpose of using a random delay time interval, the same random delay generator as defined in EN50494 might be used except for the maximum delay time that is set to a short maximum delay time of in the range from 1 to 20 ms, e.g. 5 ms. An embodiment of such a random delay time generator 800 is depicted in Fig. 9. The structure and function of such a random delay time generator 800 are generally known in the art, e.g. from EN50494 and will thus not be explained in more detail here. Such an implementation allows for easy fall back to the conventional solution of 1 second maximum delay as defined in the standard and moreover minimizes the required software modifications to implement the herein described low latency traffic control management. The short delay between end of the detected DiSEqC command and transmission of the own DiSEqC command allows to use the available "free" bus periods more efficiently and hence minimizes the risk of multiple collisions.

To further reduce the risk of a collision, the (DC) voltage can be changed to a higher level before sensing the (DC) current. Moreover, different minimum, average, and/or maximum random delay times could be used depending on the DiSEqC command and/or device in order to implement a statistical bus access priority. The larger the minimum, average, and/or maximum random delay, the less likely it is that a device achieves to send its command prior to another device that uses a smaller minimum, average, and/or maximum random delay to send its command.

In general, there are various options to implement a bus access priority scheme, i.e. to assign different priorities to different devices (controllers, receivers). One option is to apply a different voltage level for sensing the bus, i.e. for measuring a current on the bus, to different devices. In particular, in an embodiment the sensing voltage has a higher voltage level for receivers and/or controllers with higher priority than the sensing voltage for receivers and/or controllers with lower priority. This can be based on a different fixed voltage level for each receiver (e.g. linked to the user band) or based on a pseudo-random selection of a given set of sensing voltages (e.g. 14.5V, 15V, 15.5V, 16V, 16.5V).

Another option is to use different delay time intervals for different devices. In particular, in an embodiment the fixed delay time interval is shorter for devices with higher priority than the fixed delay time interval for devices with lower priority. For instance, according to a useful approach this delay value is linked to the User Band (UB) assigned to the user. This ensures that the same delay value is not used by different receivers connected to the single cable network. The pseudo-random delay time computation of the single cable standard also depends on the UB number.

Preferably, the step of measuring the sensing current is repeated at least once after the sensing current is measured to be above a predetermined current threshold before transmission of data over the bus. This ensures that the bus is really free for use by the device before the data transmission is actually started. Further, in this embodiment only after the last measurement (i.e. after detection of a free bus) the delay time interval may have a random length, while after the other preceding measurements a fixed delay time interval is used. In a practical implementation the delay time interval may be always selected (pseudo-)randomly to avoid deadlock of two or more sensing devices and keep the controller software simple (i.e. requiring less "if' statements).

As explained above, in a preferred embodiment the sensing voltage is set to a specific value for measurement of the sensing current. In this case the sensing voltage can be kept and the current measurement can be repeated in very short time intervals even below 1 ms. The main advantage of lowering the voltage to the supply voltage (or alternatively setting it to a different sensing level) is to avoid collision of two or more controllers sensing at the same time.

In another embodiment the voltage applied to the bus can be set to two voltage levels, namely the supply voltage or the transmission voltage. In this case the sensing current is measured in the voltage transition period, and the voltage falls back to the supply voltage before the transmission voltage is reached. Another advantage is that, as described above, the likelihood of a collision between two or more sensing controllers is reduced.

In still another embodiment different sensing voltages can be selected (e.g. according to a list of different selectable voltages or randomly), for instance with a granularity of 0.5V. This way of setting the sensing voltage can be applied for subsequent measurements in addition to the option of falling back to the supply voltage.

The main advantages of the proposed solutions are less increase in scan time due to high bus activity, less risk of multiple collisions, interoperability of devices with same or similar scan algorithm in the Single Cable network, and the possibility to implement a statistical bus access priority. Further, a notable reduction of blind channel scan time in case of frequent DiSEqC control collisions (e.g. if two receivers perform blind channel scan at same time) can be achieved. The proposed solution is generally applicable to both EN50494 and upcoming Single Cable standards.

Fig. 10 shows an example of a communication system 800. The communication system 800 comprises an interface 820 that receives satellite signals from an antenna 810 and transmits the received signals to receivers 81-1, 81-2, ... 81-N or controllers 83-1, 83-2, ... 83-8 via a bus 880. Within the context of the present specification, the term "bus" comprises the tree-like cable network that interconnects the receivers 81-1, 81-2, ... 81-N or controllers 83-1, 83-2, ... 83-8 with the interface 820. For example, the bus 880 may comprise the single cable 813, a power splitter or directional coupler 815 and further cables 84-1, 84-2, ... 84-N between the power splitter 815 and the receivers 81-1 ...81-N or controllers 83-1, 83-2, ... 83-8, as well as optionally provided diodes 85-1 ... 85-N. Any of the controllers 83-1, ...83-8 may be implemented in the manner as has been described above with reference to Figs. 1A and 1B. As is to be clearly understood, the communication system may also comprise controllers 83-1 ... 83-8 which are different from the controller described above.

Examples of the receiver 81 comprise a stand-alone receiver, a set-top box, a built-in component of a television, a DVD-recorder, a computer or others. The receiver 81 may, for example, be connected with a television apparatus. The interface 820 may be a single cable interface (SCIF) that may be embedded in a single cable router (SCR), a LNB (low noise block) or a suitable switch. The receiver 81 may integrate one or more demodulators. The antenna 810 may be any kind of antenna, which is configured to receive signals from communication satellites 817. Examples of the antenna 810 may comprise satellite dishes or other suitable antennas for receiving the signals. The antenna 810 may comprise several antenna devices, which may be, for example, assigned to different satellites 817. Nevertheless, as is clearly to be understood, one single antenna 810 may receive signals from a plurality of satellites. Usually, the antenna 810 receives signals over the broadband spectrum of the satellite signals (e.g. between 1 und 2 GHz). Generally, the signals received by the antenna may be assigned to banks, which are defined as a group of received contiguous channels which belong to a polarization and/or a band (for example, low band, high band, horizontal polarization, vertical polarization). The bandwidth of the single cable (coaxial cable) 813 may be divided into slots or user bands. Each demodulator being a component of a receiver 81-1, 81-2, ... 81-N may be allocated a slot. The interface 820 transmits signals to one of the receivers 81-1, 81-2, ... 81-N in the allocated slot. The interface 820 is remotely controlled by the receiver 81 via DiSEqC (digital bus satellite equipment control) commands.

The single cable connection 813 usually is implemented by a coaxial cable that may transmit both bidirectional data/signals and power. The structure and the functionality of the DiSEqC signals are explained in the respective literature referring to the standard. Usually, in order to select a desired channel of the satellite signal, the receiver 81 or controller of the receiver 81 sends a DiSEqC command to the interface 820. The DiSEqC command may include data that may comprise information about the bank (band, feed, polarization) that carries the desired signal, information about the frequency of the desired signal and information about the slot, on which the desired signal is expected.

The power splitter or directional coupler 815 may be operable to transmit the signals from the single cable connection 813 to each of the receivers 81-1 ... 81-N via cables 84-1 ... 84-N. In one embodiment, diodes 85-1 ... 85-N may be disposed between any of the receivers 81-1 ... 81-N and the power splitter or directional coupler 815. Generally, the communication system 800 may comprise up to eight receivers 81-1 ... 81-N. Nevertheless, it is to be appreciated that the communication system 800 may comprise more receivers. The communication system 800 comprises at least one receiver or a controller according to an embodiment of the present disclosure. The communication system 800 further may comprise one or more receiver which is not according to an embodiment.

Fig. 11 shows elements of a receiver 81 according to an embodiment of the present disclosure. The receiver 81 may be a satellite receiver. The general components of a receiver have been described in more detail in the prior art. In addition to the components that provide the basic functionality of the receiver, the receiver 81 may comprise a controller 83 and a processing device 819. The controller 83 may be implemented as is illustrated in Figs. 1A and 1B, respectively. The receiver 81 may further comprise a memory 821. For example, the memory 821 may store the wait time interval which has been explained above with reference to Figs. 6 and 7. The receiver 81 may further comprise an additional capacitance 822 or electrical components which may influence the voltage-time characteristic as has been explained above with reference to Figs. 6 and 7. The memory 821 may also store the voltage-time characteristic of the controller. As is to be clearly understood, the controller 83, the processing device 819, and the memory 821 may perform special functionalities of the receiver. For example, the controller that performs the basic functionality of the receiver may additionally perform the functionality that has been described while referring to the embodiments. Alternatively, the controller 83 described may be a separate component of the receiver 81. Likewise, the general processor of the receiver may integrate the processing device 819 or simply perform the functionality of the processing device 819. Alternatively, the processing device 819 may be a separate component of the receiver 81. Part of the functionality described above as being performed by the controller or the processing device may be performed by any other component of the receiver. For example, the processing device 819 and the controller 83 may be comprise integrated circuits and/or programmed microprocessors. According to an embodiment, the controller 83 may be a commonly available controller, and the general processor of the receiver 81 may be configured to determine a signal activity based on the measured current.

According to a further embodiment, a computer program may comprise computer program code means adapted to perform the method of operating the receiver or controller as explained above, when the program is run on a computer or processor.

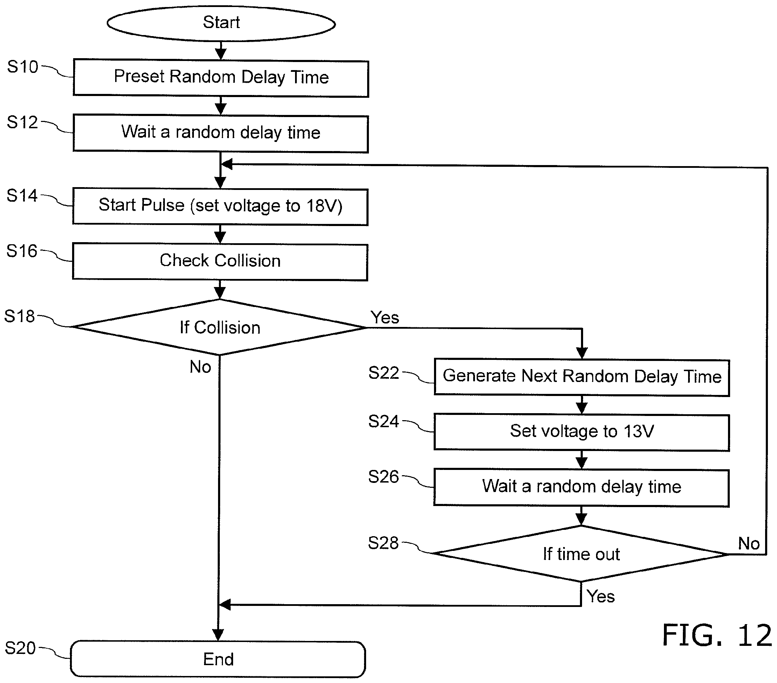

Fig. 12 illustrates a process flow of a method of detecting a signal activity on a bus, in particular for low latency traffic control management according to an embodiment. The method includes presetting a random delay time (S10), waiting a random delay time (S12), starting a pulse (i.e. setting the voltage to the transmission voltage of e.g. 18V) (S14), and checking a collision (S16). If no collision is detected (S18) the method ends (S20), i.e. the data will be transmitted as desired. If a collision is detected (S18) that method continues with generating the next random delay time (S22), setting the voltage to the supply voltage (e.g. to 13V) (S24), waiting the set delay time (S26) and checking if there is a time out (S28). If there is a time out the method ends (S20), otherwise the method returns to step S14. In case of time out, basically several options exist, e.g. to transmit the data anyway, to retry sensing or data transmission again after some longer wait time, or to abort the operation and inform the user.

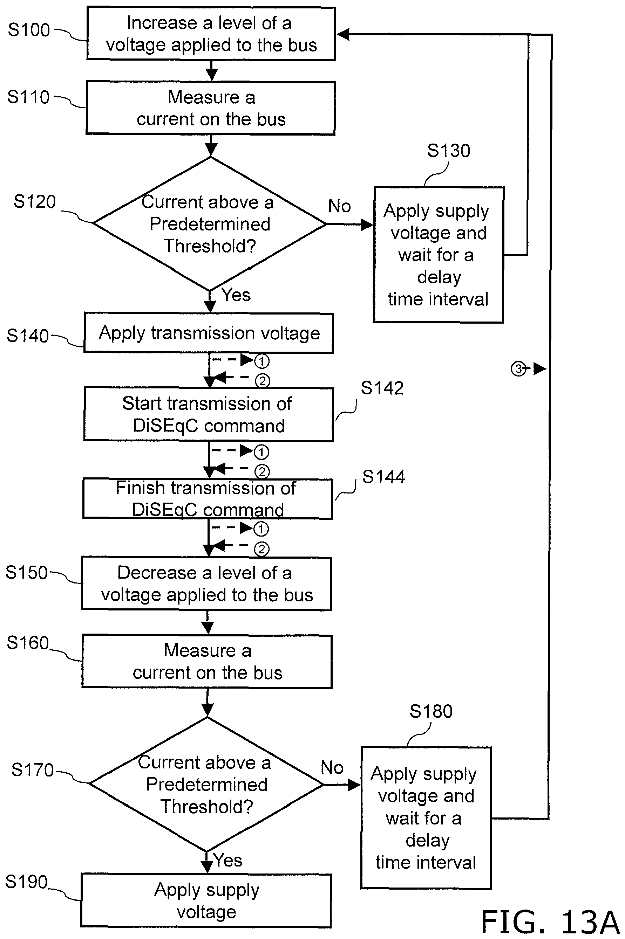

Fig. 13A illustrates a process flow of a method of detecting a signal activity, for example, command data, such as DiSEqC control signals, on a bus and avoiding data collision by changing a level of a voltage on the bus and measuring the current on the bus, utilizing the method explained with reference to Figs. 4A and 4B.

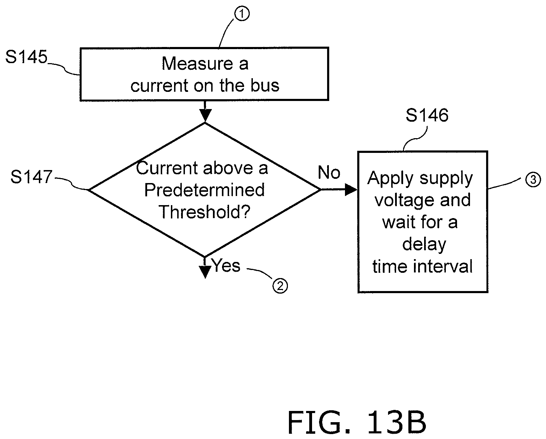

At S100 a level of the voltage applied to the bus is increased. At S110 the current is measured on the bus. At S120 it is determined whether the current is above or below the predetermined threshold. If the current is not above the predetermined threshold (No) at S130 the supply voltage is applied to the bus and return to S100 is delayed for the delay time interval. If the current is above the predetermined threshold (Yes) at S140 the transmission voltage is applied. At S142, the transmission of command data through the bus to the SCIF is started. Optionally, before S142, the procedure may jump to S145 shown in Fig. 13B, where a further measurement for collision detection is performed.

At S 145, a current on the bus is measured. At S147, it is determined whether the current is above a predetermined threshold or not. If the current is above the predetermined threshold, the procedure jumps to S142. Else, the procedure proceeds to S146, where a supply voltage is applied and the procedure waits for a delay time interval. Thereafter, the procedure proceeds to S100. During transmission, optionally, the procedure may jump to S145 and follow the sequence illustrated in Fig. 13B. If it is determined at S147 that the current is below the predetermined threshold, the data transmission is interrupted and the procedure proceeds to S146. If it is determined at S147, that the current is above the predetermined threshold, the procedure proceeds to S144, where the transmission of the DiSEqC command is finished. After finishing the transmission of the DiSEqC command and before decreasing a level of the voltage applied to the bus at S150, the procedure may optionally jump to S145 and follow the sequence illustrated in Fig. 13B. If it is determined at S147, that the current is above the predetermined threshold, the procedure proceeds to S150.

At S150 a level of the voltage applied to the bus is decreased. At S160 the current is measured on the bus. At S170 it is determined whether the current is above or below the predetermined threshold. If the current is below the predetermined threshold (No) at S180, the supply voltage is applied and return to S100 is delayed for the delay time interval. Thereafter, the process returns to S100 and the process sequence starting from S100 (Increase a level of a voltage applied to the bus) is repeated. If the current is above the predetermined threshold (Yes) at S190 the supply voltage is applied to the bus.

According to a further embodiment, the receiver may further include a counter which counts the interrupted transmission processes. The receiver may be configured to entirely stop the transmission process after the counter has counted a predetermined number of transmission attempts.

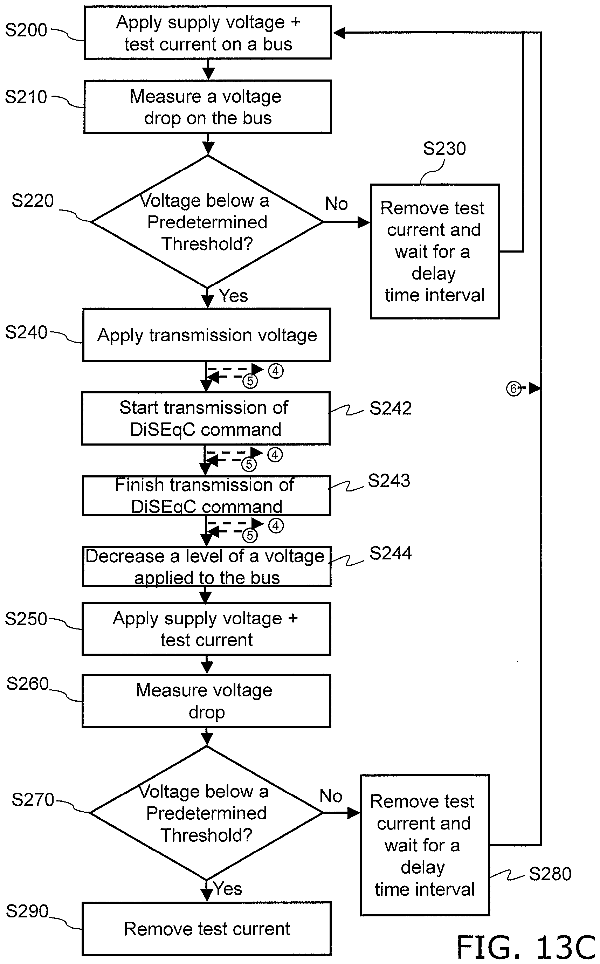

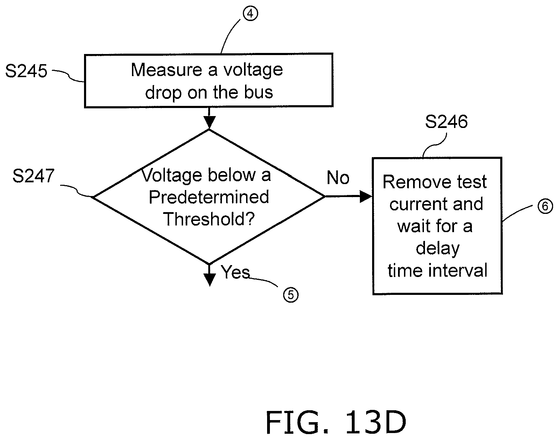

Fig. 13C illustrates a process flow of a method of detecting command data, as e.g. DiSEqC control signals, on the bus and avoiding data collision by applying the test current on the bus and measuring the voltage drop on the bus. At S200 the supply voltage and the test current are applied on the bus. At S210 the voltage drop is measured on the bus. At S220 it is determined whether the voltage drop is above or below the predetermined threshold. If the voltage drop is not below the predetermined threshold (No) at S230 the test current is removed and return to S200 is delayed for the delay time interval. If the voltage drop is below the predetermined threshold (Yes) at S240 the transmission voltage is applied. At S242, the transmission of command data through the bus to the SCIF is started. Optionally, before S242, the procedure may jump to S245 shown in Fig. 13D, where a further measurement for collision detection is performed.

At S245, a voltage drop on the bus is measured. At S247, it is determined whether the voltage drop is below a predetermined threshold (which may depend on the voltage level of the own command transmission) or not. If the voltage drop is not below the predetermined threshold, the procedure jumps to S242. Else, the procedure proceeds to S246, where the test current is removed and the procedure waits for a delay time interval. Thereafter, the procedure proceeds to S200. During transmission, optionally, the procedure may jump to S245 and follow the sequence illustrated in Fig. 13D. If it is determined at S247 that the voltage drop is larger than the predetermined threshold, the data transmission is interrupted and the procedure proceeds to S246. If it is determined at S247 that the voltage drop is smaller than the predetermined threshold, the procedure proceeds to S243, where the transmission of the DiSEqC command is finished. After finishing the transmission of the DiSEqC command and before decreasing a level of the voltage applied to the bus at S244, the procedure may optionally jump to S245 and follow the sequence illustrated in Fig. 13D. If it is determined at S247 that the voltage drop is smaller than the predetermined threshold, the procedure proceeds to S244.

At S250 the supply voltage and the test current are applied on the bus. At S260 the voltage drop is measured on the bus. At S270 it is determined whether the voltage drop is above or below the predetermined threshold. If the voltage drop is above the predetermined threshold (No) at S280 the test current is removed and return to S100 is delayed for the delay time interval. If the voltage drop is below the predetermined threshold (Yes) at S290 the test current is removed from the bus.

According to a further embodiment, the receiver may further include a counter which counts the interrupted transmission processes. The receiver may be configured to entirely stop the transmission process after the counter has counted a predetermined number of transmission attempts.

According to a further embodiment, a method for detecting a signal activity on a bus may comprise measuring a current on the bus, and determining a signal activity based on the measured current. For example, as illustrated in Fig. 13A, between steps S140 and S150, the voltage level is not changed before performing the respective measurements. Further, controllers may be operated at a comparatively high supply voltage, which may be at the upper boundary of the first predetermined voltage range. Accordingly, a signal activity on the bus may be determined by measuring the current even without changing the voltage.

Accordingly, a controller that is configured to transmit data to a bus of a receiver system, may comprise a voltage source configured to apply a voltage to the bus, a sensor configured to measure a current, and a transmitter configured to adapt a transmission process of transmitting data on the bus based on a signal activity, the signal activity being determined based on the measured current. Further, a receiver that is operable in a single cable system and that is configured to receive satellite signals, may comprise the controller as described above, and a processor configured to determine a signal activity based on the measured current.

Thus, the foregoing discussion discloses and describes merely exemplary embodiments of the present disclosure. As will be understood by those skilled in the art, the present disclosure may be embodied in other specific forms without departing from the essential characteristics thereof. Accordingly, the disclosure of the present disclosure is intended to be illustrative, but not limiting of the scope of the disclosure, as well as other claims. The disclosure, including any readily discernible variants of the teachings herein, defines, in part, the scope of the foregoing claim terminology such that no inventive subject matter is dedicated to the public.

In the claims, the word "comprising" does not exclude other elements or steps, and the indefinite article "a" or "an" does not exclude a plurality. A single element or other unit may fulfill the functions of several items recited in the claims. The mere fact that certain measures are recited in mutually different dependent claims does not indicate that a combination of these measures cannot be used to advantage.

In so far as embodiments of the disclosure have been described as being implemented, at least in part, by software-controlled data processing apparatus, it will be appreciated that a non-transitory machine-readable medium carrying such software, such as an optical disk, a magnetic disk, semiconductor memory or the like, is also considered to represent an embodiment of the present disclosure. Further, such a software may also be distributed in other forms, such as via the Internet or other wired or wireless telecommunication systems.

The elements of the disclosed devices, apparatus and systems may be implemented by corresponding hardware and/or software elements, for instance appropriated circuits. A circuit is a structural assemblage of electronic components including conventional circuit elements, integrated circuits including application specific integrated circuits, standard integrated circuits, application specific standard products, and field programmable gate arrays. Further a circuit includes central processing units, graphics processing units, and microprocessors which are programmed or configured according to software code. A circuit does not include pure software, although a circuit includes the above-described hardware executing software.

## Claims

1. A method for transmitting data over a bus, to which a plurality of receivers and/or controllers are connected, said method comprising:
- measuring a sensing current on the bus;
- repeating the step of measuring the sensing current after a delay time interval, if the sensing current is measured to be at or below a predetermined current threshold; and
- applying a transmission voltage to the bus and transmitting data over the bus, if the sensing current is measured to be above the predetermined current threshold,
wherein said delay time interval is shorter than 10 ms.

2. The method according to claim 1,
wherein said delay time interval is a fixed delay time interval.

3. The method according to claim 2,
wherein said fixed delay time interval is different for the plurality of receivers and/or controllers connected to the bus, in particular shorter for receivers and/or controllers with higher priority than for receivers and/or controllers with lower priority,

4. The method according to claim 1,
wherein said delay time interval is a random delay time interval.

5. The method according to any preceding claim,
wherein the step of measuring the sensing current is repeated a predetermined number of times, during a predetermined time or until the sensing current is measured to be above the predetermined current threshold.

6. The method according to any preceding claim,
further comprising the step of applying a sensing voltage to the bus, wherein the sensing voltage is between a supply voltage and the transmission voltage, wherein the supply voltage is applied to the bus during non-transmission of data on the bus and the transmission voltage is applied to the bus during transmission of data on the bus,
wherein the steps of applying the sensing voltage to the bus and measuring the sensing current after a delay time interval are repeated if the sensing current is measured to be at or below the predetermined current threshold.

7. The method according to claim 6,
wherein for different receivers and/or controllers a sensing voltage having a different voltage level is applied to the bus, in particular a sensing voltage having a higher voltage level for receivers and/or controllers with higher priority than a sensing voltage for receivers and/or controllers with lower priority,

8. The method according to any preceding claim,
wherein the transmission of data is started after a random deferral time interval starting after the sensing current is measured to be above the predetermined current threshold.

9. The method according to any preceding claim,
wherein the sensing current on the bus is measured also during and/or after transmission of data over the bus, and
wherein, if the sensing current is measured to be at or below the predetermined current threshold, the transmission of data over the bus is repeated, in particular the step of measuring the sensing current is repeated after said delay time interval starting after the sensing current is measured to be at or below the predetermined current threshold.

10. A method for transmitting data over a bus, to which a plurality of receivers and/or controllers are connected, said method comprising:
- applying a test current to the bus;
- measuring a test voltage drop on the bus;
- repeating the step of measuring the test voltage drop after a delay time interval, if the test voltage drop is measured to be not below a predetermined voltage threshold; and
- applying a transmission voltage to the bus and transmitting data over the bus, if the test voltage drop is measured to be below the predetermined voltage threshold,
wherein said delay time interval is shorter than 10 ms.

11. A controller for transmitting data over a bus, to which a plurality of receivers and/or controllers are connected, said controller comprising:
- a current sensor (141) configured to measure a sensing current on the bus; and
- a control unit (130) configured to control the current sensor to repeat the measuring of the sensing current after a delay time interval, if the sensing current is measured to be at or below a predetermined current threshold, and to apply a transmission voltage to the bus and transmit data over the bus, if the sensing current is measured to be above the predetermined current threshold,
wherein said delay time interval is shorter than 10 ms.

12. A controller for transmitting data over a bus, to which a plurality of receivers and/or controllers are connected, said controller comprising:
- a current source (151) configured to apply a test current to the bus;
- a voltage sensor (152) configured to measure a test voltage drop on the bus; and
- a control unit (150) configured to control the voltage sensor to repeat the measuring of the test voltage drop after a delay time interval, if the test voltage drop is measured to be not below a predetermined voltage threshold, and to apply a transmission voltage to the bus and transmit data over the bus, if the test voltage drop is measured to be below the predetermined voltage threshold,
wherein said delay time interval is shorter than 10 ms.

13. A receiver operable in a single cable system, the receiver being configured to receive satellite signals, the receiver comprising a controller according to claim 11 or 12.

14. A computer program comprising instructions which, when the program is executed by a computer, cause the computer to perform the steps of the method of claim 1 or 10.

## Patentansprüche

1. Verfahren zum Übertragen von Daten über einen Bus, mit dem mehrere Empfänger und/oder Steuergeräte verbunden sind, das Verfahren aufweisend:
- Messen eines Abfühlstroms auf dem Bus;
- Wiederholen des Schritts des Messens des Abfühlstroms nach einem Verzögerungszeitintervall, wenn gemessen wird, dass der Abfühlstrom auf oder unter einer vorbestimmten Stromschwelle liegt; und
- Anlegen einer Übertragungsspannung an den Bus und Übertragen von Daten über den Bus, wenn gemessen wird, dass der Abfühlstrom über der vorbestimmten Stromschwelle liegt,
wobei das Verzögerungszeitintervall kürzer als 10 ms ist.

2. Verfahren nach Anspruch 1,
wobei das Verzögerungszeitintervall ein festgelegtes Verzögerungszeitintervall ist.

3. Verfahren nach Anspruch 2,
wobei das festgelegte Verzögerungszeitintervall für die mehreren Empfänger und/oder Steuergeräte, die mit dem Bus verbunden sind, unterschiedlich ist, insbesondere kürzer für Empfänger und/oder Steuergeräte mit höherer Priorität als für Empfänger und/oder Steuergeräte mit niedrigerer Priorität.

4. Verfahren nach Anspruch 1,
wobei das Verzögerungszeitintervall ein willkürliches Verzögerungszeitintervall ist.

5. Verfahren nach einem der vorhergehenden Ansprüche,
wobei der Schritt des Messens des Abfühlstroms eine vorbestimmte Anzahl von Malen, während einer vorbestimmten Zeit, oder bis gemessen wird, dass der Abfühlstrom über der vorbestimmten Stromschwelle liegt, wiederholt wird.

6. Verfahren nach einem der vorhergehenden Ansprüche, ferner aufweisend den Schritt des Anlegens einer Abfühlspannung an den Bus, wobei die Abfühlspannung zwischen einer Versorgungsspannung und der Übertragungsspannung liegt, wobei die Versorgungsspannung an den Bus während Nichtübertragung von Daten auf dem Bus angelegt wird und die Übertragungsspannung an den Bus während Übertragung von Daten auf dem Bus angelegt wird,
wobei die Schritte des Anlegens der Abfühlspannung an den Bus und des Messens des Abfühlstroms nach einem Verzögerungszeitintervall wiederholt werden, wenn gemessen wird, dass der Abfühlstrom auf oder unter der vorbestimmten Stromschwelle liegt.

7. Verfahren nach Anspruch 6,
wobei für unterschiedliche Empfänger und/oder Steuergeräte eine Abfühlspannung mit einem unterschiedlichen Spannungspegel angelegt wird, insbesondere eine Abfühlspannung mit einem höheren Spannungspegel für Empfänger und/oder Steuergeräte mit höherer Priorität als eine Abfühlspannung für Empfänger und/oder Steuergeräte mit niedrigerer Priorität.

8. Verfahren nach einem der vorhergehenden Ansprüche,
wobei die Übertragung von Daten nach einem willkürlichen Aufschubzeitintervall gestartet wird, der beginnt, wenn gemessen wird, dass der Abfühlstrom über der vorbestimmten Stromschwelle liegt.

9. Verfahren nach einem der vorhergehenden Ansprüche,
wobei der Abfühlstrom auf dem Bus außerdem während und/oder nach dem Übertragen von Daten über den Bus gemessen wird, und
wobei, wenn gemessen wird, dass der Abfühlstrom auf oder unter der vorbestimmten Stromschwelle liegt, die Übertragung von Daten über den Bus wiederholt wird, wobei insbesondere der Schritt des Messens des Abfühlstroms nach dem Verzögerungszeitintervall wiederholt wird, beginnend, nachdem gemessen wurde, dass der Abfühlstrom auf oder unter der vorbestimmten Stromschwelle liegt.

10. Verfahren zum Übertragen von Daten über einen Bus, mit dem mehrere Empfänger und/oder Steuergeräte verbunden sind, das Verfahren aufweisend:
- Anlegen eines Teststroms an den Bus;
- Messen eines Testspannungsabfalls am Bus;
- Wiederholen des Schritts des Messens des Testspannungsabfalls nach einem Verzögerungszeitintervall, wenn gemessen wird, dass der Testspannungsabfall nicht unter einer vorbestimmten Spannungsschwelle liegt; und
- Anlegen einer Übertragungsspannung an den Bus und Übertragen von Daten über den Bus, wenn gemessen wird, dass die Testspannung unter der vorbestimmten Spannungsschwelle liegt,
wobei das Verzögerungszeitintervall kürzer als 10 ms ist.

11. Steuergerät zum Übertragen von Daten über einen Bus, mit dem mehrere Empfänger und/oder Steuergeräte verbunden sind, das Steuergerät aufweisend:
- einen Stromsensor (141), der zum Messen eines Abfühlstroms auf dem Bus konfiguriert ist; und
- eine Steuereinheit (130), die zum Steuern des Stromsensors zum Wiederholen des Messens des Abfühlstroms nach einem Verzögerungszeitintervall, wenn gemessen wird, dass der Abfühlstrom auf oder unter einer vorbestimmten Stromschwelle liegt, und zum Anlegen einer Übertragungsspannung an den Bus und Übertragen von Daten über den Bus, wenn gemessen wird, dass der Abfühlstrom über der vorbestimmten Stromschwelle liegt, konfiguriert ist,
wobei das Verzögerungszeitintervall kürzer als 10 ms ist.

12. Steuergerät zum Übertragen von Daten über einen Bus, mit dem mehrere Empfänger und/oder Steuergeräte verbunden sind, das Steuergerät aufweisend:
- eine Stromquelle (151), die zum Anlegen einer Testspannung an den Bus konfiguriert ist;
- einen Spannungssensor (152), der zum Messen eines Testspannungsabfalls am Bus konfiguriert ist; und
- eine Steuereinheit (150), die zum Steuern des Spannungssensors zum Wiederholen des Messens des Testspannungsabfalls nach einem Verzögerungszeitintervall, wenn gemessen wird, dass der Testspannungsabfall nicht unter einer vorbestimmten Spannungsschwelle liegt, und zum Anlegen einer Übertragungsspannung an den Bus und Übertragen von Daten über den Bus, wenn gemessen wird, dass die Testspannung unter der vorbestimmten Spannungsschwelle liegt, konfiguriert ist,
wobei das Verzögerungszeitintervall kürzer als 10 ms ist.

13. Empfänger, der in einem Einzelkabelsystem betriebsfähig ist, wobei der Empfänger zum Empfangen von Satellitensignalen konfiguriert ist, wobei der Empfänger ein Steuergerät nach einem der Ansprüche 11 oder 12 aufweist.

14. Computerprogramm, das Anweisungen aufweist, die, wenn das Programm durch einen Computer ausgeführt wird, bewirken, dass der Computer die Schritte des Verfahrens nach einem der Ansprüche 1 oder 10 ausführt.

## Revendications

1. Procédé de transmission de données sur un bus, auquel une pluralité de récepteurs et/ou contrôleurs sont raccordés, ledit procédé comprenant :
- la mesure d'un courant de détection sur le bus ;
- la répétition de l'étape de mesure du courant de détection après un intervalle de temps de temporisation, si le courant de détection est mesuré comme étant égal ou inférieur à un seuil de courant prédéterminé ; et
- l'application d'une tension de transmission au bus et la transmission de données sur le bus, si le courant de détection est mesuré comme étant supérieur au seuil de courant prédéterminé,
dans lequel ledit intervalle de temps de temporisation est inférieur à 10 ms.

2. Procédé selon la revendication 1,
dans lequel ledit intervalle de temps de temporisation est un intervalle de temps de temporisation fixe.

3. Procédé selon la revendication 2,
dans lequel ledit intervalle de temps de temporisation fixe est différent pour la pluralité de récepteurs et/ou contrôleurs raccordés au bus, en particulier plus court pour des récepteurs et/ou contrôleurs avec une plus forte priorité que pour des récepteurs et/ou contrôleurs avec une plus faible priorité.

4. Procédé selon la revendication 1,
dans lequel ledit intervalle de temps de temporisation est un intervalle de temps de temporisation aléatoire.

5. Procédé selon une quelconque revendication précédente,
dans lequel l'étape de mesure du courant de détection est répétée un nombre prédéterminé de fois, pendant un temps prédéterminé ou jusqu'à ce que le courant de détection soit mesuré comme étant supérieur au seuil de courant prédéterminé.

6. Procédé selon une quelconque revendication précédente,
comprenant en outre l'étape d'application d'une tension de détection au bus, la tension de détection se situant entre une tension d'alimentation et la tension de transmission, la tension d'alimentation étant appliquée au bus en dehors de la transmission de données sur le bus et la tension de transmission étant appliquée au bus pendant la transmission de données sur le bus,
dans lequel les étapes d'application de la tension de détection au bus et de mesure du courant de détection après un intervalle de temps de temporisation sont répétées si le courant de détection est mesuré comme étant égal ou inférieur au seuil de courant prédéterminé.

7. Procédé selon la revendication 6,
dans lequel, pour différents récepteurs et/ou contrôleurs, une tension de détection ayant un niveau de tension différent est appliquée au bus, en particulier une tension de détection ayant un niveau de tension plus élevé pour des récepteurs et/ou contrôleurs avec une plus forte priorité qu'une tension de détection pour des récepteurs et/ou contrôleurs avec une plus faible priorité.

8. Procédé selon une quelconque revendication précédente,
dans lequel la transmission de données est lancée après un intervalle de temps de report aléatoire démarrant après que le courant de détection a été mesuré comme étant supérieur au seuil de courant prédéterminé.

9. Procédé selon une quelconque revendication précédente,
dans lequel le courant de détection sur le bus est également mesuré pendant et/ou après la transmission de données sur le bus, et
dans lequel, si le courant de détection est mesuré comme étant égal ou inférieur au seuil de courant prédéterminé, la transmission de données sur le bus est répétée, en particulier l'étape de mesure du courant de détection est répétée après ledit intervalle de temps de temporisation démarrant après que le courant de détection a été mesuré comme étant égal ou inférieur au seuil de courant prédéterminé.

10. Procédé de transmission de données sur un bus, auquel une pluralité de récepteurs et/ou contrôleurs sont raccordés, ledit procédé comprenant :
- l'application d'un courant d'essai au bus ;
- la mesure d'une chute de tension d'essai sur le bus ;
- la répétition de l'étape de mesure de la chute de tension d'essai après un intervalle de temps de temporisation, si la chute de tension d'essai est mesurée comme n'étant pas inférieure à un seuil de tension prédéterminé ; et
- l'application d'une tension de transmission au bus et la transmission de données sur le bus, si la chute de tension d'essai est mesurée comme étant inférieure au seuil de tension prédéterminé,
dans lequel ledit intervalle de temps de temporisation est inférieur à 10 ms.

11. Contrôleur pour la transmission de données sur un bus, auquel une pluralité de récepteurs et/ou contrôleurs sont raccordés, ledit contrôleur comprenant :
- un détecteur de courant (141) configuré pour mesurer un courant de détection sur le bus ; et
- une unité de commande (130) configurée pour commander le détecteur de courant pour répéter la mesure du courant de détection après un intervalle de temps de temporisation, si le courant de détection est mesuré comme étant égal ou inférieur à un seuil de courant prédéterminé, et pour appliquer une tension de transmission au bus et transmettre des données sur le bus, si le courant de détection est mesuré comme étant supérieur au seuil de courant prédéterminé,
dans lequel ledit intervalle de temps de temporisation est inférieur à 10 ms.

12. Contrôleur pour la transmission de données sur un bus, auquel une pluralité de récepteurs et/ou contrôleurs sont raccordés, ledit contrôleur comprenant :
- une source de courant (151) configurée pour appliquer un courant d'essai au bus ;
- un détecteur de tension (152) configuré pour mesurer une chute de tension d'essai sur le bus ; et
- une unité de commande (150) configurée pour commander le détecteur de tension pour répéter la mesure de la chute de tension d'essai après un intervalle de temps de temporisation, si la chute de tension d'essai est mesurée comme n'étant pas inférieure à un seuil de tension prédéterminé, et pour appliquer une tension de transmission au bus et transmettre des données sur le bus, si la chute de tension d'essai est mesurée comme étant inférieure au seuil de tension prédéterminé,
dans lequel ledit intervalle de temps de temporisation est inférieur à 10 ms.

13. Récepteur utilisable dans un système monocâble, le récepteur étant configuré pour recevoir des signaux satellitaires, le récepteur comprenant un contrôleur selon la revendication 11 ou 12.

14. Programme informatique comprenant des instructions qui, quand le programme est exécuté par un ordinateur, conduisent l'ordinateur à effectuer les étapes du procédé de la revendication 1 ou 10.
